(19) Europäisches Patentamt
European Patent Office
Office européen des brevets

(11) **EP 4 340 505 A1**

(12) **EUROPEAN PATENT APPLICATION**
published in accordance with Art. 153(4) EPC

(43) Date of publication:
**20.03.2024 Bulletin 2024/12**

(21) Application number: **22897435.8**

(22) Date of filing: **14.10.2022**

(51) International Patent Classification (IPC):
***H04W 72/04*** (2023.01)

(52) Cooperative Patent Classification (CPC):
**H04B 7/0456; H04B 7/06; H04W 72/04;**
**H04W 72/231; H04W 72/232**

(86) International application number:
**PCT/CN2022/125362**

(87) International publication number:
**WO 2023/093352 (01.06.2023 Gazette 2023/22)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **25.11.2021 CN 202111414184**

(71) Applicant: **Huawei Technologies Co., Ltd.**
**Shenzhen, Guangdong 518129 (CN)**

(72) Inventors:
• **ZHANG, Didi**
**Shenzhen, Guangdong 518129 (CN)**
• **WANG, Xiaohan**
**Shenzhen, Guangdong 518129 (CN)**
• **GE, Shibin**
**Shenzhen, Guangdong 518129 (CN)**
• **JIN, Huangping**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **METHOD AND APPARATUS FOR CHANNEL STATE INFORMATION (CSI) REPORT**

(57)   Embodiments of this application provide a method and an apparatus for triggering channel state information CSI reporting. The method includes: A terminal device receives downlink control information sent by a network device. The downlink control information is for triggering N pieces of CSI reporting. The N pieces of CSI reporting are in a one-to-one correspondence with N pieces of CSI reporting configuration information indicated by the downlink control information. The N pieces of CSI reporting configuration information are different from each other, where N is a positive integer greater than 1. The terminal device performs the N pieces of CSI reporting based on the N pieces of CSI reporting configuration information. In the communication method provided in this application, one piece of downlink control information simultaneously triggers a plurality of different pieces of CSI reporting, so that the network device can perform precoding matrix reconstruction based on CSI reporting with different content, and accuracy of coding matrix reconstruction is improved. In addition, prior CSI reporting provides base information for subsequent CSI reporting, so that accuracy of precoding matrix reconstruction or channel reconstruction performed by the network device is improved.

Method 600

| Network device | | Terminal device |
| --- | --- | --- |

S610: The network device sends downlink control information to the terminal device, where the downlink control information is for triggering N pieces of channel state information CSI reporting

S620: The terminal device performs the N pieces of CSI reporting based on configuration information of the N pieces of CSI reporting

FIG. 6

## Description

This application claims priority to Chinese Patent Application No. 202111414184.2, filed with the China National Intellectual Property Administration on November 25, 2021 and entitled "METHOD AND APPARATUS FOR CHANNEL STATE INFORMATION CSI REPORTING", which is incorporated herein by reference in its entirety.

## TECHNICAL FIELD

Embodiments of this application relate to the field of wireless communication, and more specifically, to a method and an apparatus for channel state information CSI reporting.

## BACKGROUND

A 5G (5th Generation, fifth generation) communication system raises a higher requirement on system capacity, spectral efficiency, and other aspects. For an FDD (Frequency Division Duplex, frequency division duplex) massive MIMO (Multiple-Input Multiple-Output, multiple-input multiple-output) system, obtaining of downlink CSI (Channel State Information, channel state information) is one of key factors for ensuring system running. For example, a base station needs CSI for reconstruction of a downlink channel or a precoding matrix. Different from a TDD (Time Division Duplex, time division duplex) system, in the FDD system, there is a large frequency interval between an uplink channel and a downlink channel, and the uplink channel and the downlink channel are not completely reciprocal. As a result, the FDD system cannot obtain a complete downlink channel through uplink channel estimation. In a conventional FDD system, a terminal device needs to feedback CSI of a downlink channel to a base station.

However, the terminal device supports reporting of only one piece of CSI. To improve flexibility of CSI reporting, a triggering mechanism of the CSI reporting needs to be redesigned.

## SUMMARY

Embodiments of this application provide a method and an apparatus for triggering channel state information CSI reporting. A network device sends one piece of downlink control information to a terminal device. The downlink control information can activate a plurality of pieces of CSI reporting, indicate CSI reporting configuration information corresponding to the plurality of pieces of CSI, and perform the plurality of pieces of CSI reporting. Within a duration, more different CSI is fed back to the network device, to provide more measurement information to the network device for coding matrix reconstruction, so that accuracy of coding matrix reconstruction performed by the network device is improved, and system performance is improved. In addition, prior CSI reporting provides base information for subsequent CSI reporting, so that accuracy of precoding matrix reconstruction performed by the network device is improved.

According to a first aspect, a method for triggering channel state information CSI reporting is provided, including: A terminal device receives downlink control information sent by a network device. The downlink control information is for triggering N pieces of CSI reporting. The N pieces of CSI reporting are in a one-to-one correspondence with N pieces of CSI reporting configuration information indicated by the downlink control information. The N pieces of CSI reporting configuration information are different from each other, where N is a positive integer greater than 1. The terminal device performs the N pieces of CSI reporting based on the N pieces of CSI reporting configuration information.

Optionally, a manner in which the downlink control information triggers the N pieces of CSI reporting is that the downlink control information indicates the N pieces of CSI reporting configuration information.

Specifically, the CSI reporting configuration information includes at least one of the following: a reporting periodicity, a time domain offset, a measurement resource, and reporting content.

In the method for triggering channel state information CSI reporting provided in this embodiment of this application, a plurality of pieces of CSI reporting is triggered by using the downlink control information, so that the network device can obtain the plurality of pieces of CSI reporting with different content, and complete precoding matrix reconstruction based on a plurality of pieces of CSI. Therefore, accuracy of the precoding matrix reconstruction or channel reconstruction is improved, and system performance is improved. In some cases, prior CSI reporting can provide base information for subsequent CSI reporting, so that accuracy of the precoding matrix reconstruction performed by the network device is improved.

With reference to the first aspect, in some implementations of the first aspect, the downlink control information received by the terminal device includes N pieces of indication information. The N pieces of indication information are in a one-to-one correspondence with N trigger states in a trigger state list, where each trigger state corresponds to one piece of CSI reporting configuration information.

The downlink control information includes the N pieces of indication information, to indicate the N pieces of CSI reporting configuration information, so that the downlink control information triggers the N pieces of CSI reporting.

Each piece of indication information is associated with one trigger state in the trigger state list, and each trigger state is associated with one piece of CSI reporting configuration information.

Specifically, each of the N pieces of indication information includes a reporting content indication field, and the reporting content indication field indicates reporting content of CSI reporting.

Specifically, a trigger state associated with each of the N pieces of indication information includes a reporting content indication field, and the reporting content indication field indicates reporting content of CSI reporting.

With reference to the first aspect, in some implementations of the first aspect, the downlink control information received by the terminal device includes one piece of indication information. The piece of indication information corresponds to one trigger state set in a trigger state list, and the trigger state set includes N trigger states, where one trigger state corresponds to one piece of CSI reporting configuration information.

One piece of indication information is associated with one trigger state set in the trigger state list, and the trigger state set includes the N trigger states, where each trigger state corresponds to one piece of CSI reporting configuration information.

Specifically, the piece of indication information includes N reporting content indication fields, the N reporting content indication fields are in a one-to-one correspondence with the N pieces of CSI reporting, and the reporting content indication field indicates reporting content of CSI reporting.

Specifically, each of the N trigger states that corresponds to the piece of indication information includes a reporting content indication field, and the reporting content indication field indicates reporting content of CSI reporting.

Specifically, the piece of indication information includes N time domain offset indication fields, the N time domain offset indication fields are in a one-to-one correspondence with the N pieces of CSI reporting, and the time domain offset indication field indicates a time domain offset of CSI reporting.

It should be noted that some configuration information in the CSI reporting configuration information associated with the trigger state may be directly obtained, while some configuration information needs to be obtained by cooperating with another indication field in indication information.

According to a second aspect, a method for triggering channel state information CSI reporting is provided, including: A network device sends downlink control information to a terminal device. The downlink control information is for triggering N pieces of CSI reporting. The N pieces of CSI reporting are in a one-to-one correspondence with N pieces of CSI reporting configuration information indicated by the downlink control information. The N pieces of CSI reporting configuration information are different from each other, where N is a positive integer greater than 1. The network device receives the N pieces of CSI reporting performed by the terminal device based on the N pieces of CSI reporting configuration information.

Optionally, a manner in which the downlink control information triggers the N pieces of CSI reporting is that the downlink control information indicates the N pieces of CSI reporting configuration information.

Specifically, the CSI reporting configuration information includes at least one of the following: a reporting periodicity, a time domain offset, a measurement resource, and reporting content.

In the method for triggering channel state information CSI reporting provided in this embodiment of this application, a plurality of pieces of CSI reporting is triggered by using the downlink control information, so that within a duration, the network device can obtain the plurality of pieces of CSI reporting with different content, and complete precoding matrix reconstruction based on a plurality of pieces of CSI. Therefore, accuracy of the precoding matrix reconstruction or channel reconstruction is improved, and system performance is improved. In some cases, prior CSI reporting can provide base information for subsequent CSI reporting, so that accuracy of the precoding matrix reconstruction performed by the network device is improved.

With reference to the second aspect, in some implementations of the second aspect, the downlink control information sent by the network device includes N pieces of indication information. The N pieces of indication information are in a one-to-one correspondence with N trigger states in a trigger state list, where each trigger state corresponds to one piece of CSI reporting configuration information.

The downlink control information includes the N pieces of indication information, to indicate the N pieces of CSI reporting configuration information, so that the downlink control information triggers the N pieces of CSI reporting.

Each piece of indication information is associated with one trigger state in the trigger state list, and each trigger state is associated with one piece of CSI reporting configuration information.

Specifically, each of the N pieces of indication information includes a reporting content indication field, and the reporting content indication field indicates reporting content of CSI reporting.

Specifically, a trigger state associated with each of the N pieces of indication information includes a reporting content indication field, and the reporting content indication field indicates reporting content of CSI reporting.

With reference to the second aspect, in some implementations of the second aspect, the downlink control information sent by the network device includes one piece of indication information. The piece of indication information corresponds to one trigger state set in a trigger state list, and the trigger state set includes N trigger states, where one trigger state corresponds to one piece of CSI reporting configuration information.

One piece of indication information is associated with one trigger state set in the trigger state list, and the trigger state set includes the N cascaded trigger states, where each trigger state corresponds to one piece of CSI reporting configuration information.

Specifically, the piece of indication information includes N reporting content indication fields, the N reporting content indication fields are in a one-to-one correspondence with the N pieces of CSI reporting, and the reporting content indication field indicates reporting content of CSI reporting.

Specifically, each of the N trigger states that corresponds to the piece of indication information includes a reporting content indication field, and the reporting content indication field indicates reporting content of CSI reporting.

Specifically, the piece of indication information includes N time domain offset indication fields, the N time domain offset indication fields are in a one-to-one correspondence with the N pieces of CSI reporting, and the time domain offset indication field indicates a time domain offset of CSI reporting.

It should be noted that some configuration information in the CSI reporting configuration information associated with the trigger state may be directly obtained, while some configuration information needs to be obtained by cooperating with another indication field in indication information.

According to a third aspect, a codebook configuration method is provided, including: A terminal device sends a codebook combination list to a network device, where the codebook combination list includes a first-type codebook, and the first-type codebook is based on an angle-delay reciprocity. The terminal device receives codebook configuration information configured by the network device based on the codebook combination list, where the codebook configuration information is used by the terminal device to feedback channel measurement information.

The terminal device includes an angle delay reciprocity-based codebook in the codebook combination list, so that the angle delay reciprocity-based codebook takes effect at a base station, and the base station can configure the angle delay reciprocity-based codebook in the codebook configuration information for the terminal device. Therefore, the terminal device can perform channel measurement based on the angle-delay reciprocity. Because the angle-delay reciprocity requires a small amount of information to be measured, reporting overheads of the terminal device are reduced.

According to a fourth aspect, a codebook configuration method is provided, including: A network device receives a codebook combination list sent by a terminal device, where the codebook combination list includes a first-type codebook, and the first-type codebook is based on an angle-delay reciprocity. The network device sends codebook configuration information to the terminal device, where the codebook configuration information is configured by the network device based on the codebook combination list, and the codebook configuration information is used by the terminal device to feedback channel measurement information.

The terminal device includes an angle delay reciprocity-based codebook in the codebook combination list, so that the angle delay reciprocity-based codebook takes effect at a base station, and the base station can configure the angle delay reciprocity-based codebook in the codebook configuration information for the terminal device. Therefore, the terminal device can perform channel measurement based on the angle-delay reciprocity. Because the angle-delay reciprocity requires a small amount of information to be measured, reporting overheads of the terminal device are reduced.

According to a fifth aspect, a communication apparatus is provided. The communication apparatus includes units configured to perform the steps of the communication method in the first aspect or the third aspect and the implementations of the first aspect or the third aspect.

In a design, the communication apparatus is a communication chip. The communication chip may include an input circuit or an interface configured to send information or data, and an output circuit or an interface configured to receive information or data.

In another design, the communication apparatus is a communication device (for example, a terminal device). A communication chip may include a transmitter configured to send information or data, and a receiver configured to receive information or data.

According to a sixth aspect, a communication apparatus is provided. The communication apparatus includes units configured to perform the steps of the communication method in the second aspect or the fourth aspect and the implementations of the second aspect or the fourth aspect.

In a design, the communication apparatus is a communication chip. The communication chip may include an input circuit or an interface configured to send information or data, and an output circuit or an interface configured to receive information or data.

In another design, the communication apparatus is a communication device (for example, a network device). A communication chip may include a transmitter configured to send information or data, and a receiver configured to receive information or data.

According to a seventh aspect, a communication device is provided, including a processor and a memory. The memory is configured to store a computer program, and the processor is configured to invoke the computer program from the memory and run the computer program, so that the communication device performs the communication method in the first aspect or the third aspect and the implementations of the first aspect or the third aspect.

Optionally, there are one or more processors, and there are one or more memories.

Optionally, the memory may be integrated with the processor, or the memory and the processor are separately disposed.

Optionally, the communication device further includes a transmitter (transmitting device) and a receiver (receiving device).

According to an eighth aspect, a communication device is provided, including a processor and a memory. The memory is configured to store a computer program, and the processor is configured to invoke the computer program from the memory and run the computer program, so that the communication device performs the communication method in the second aspect or the fourth aspect and the implementations of the second aspect or the fourth aspect.

Optionally, there are one or more processors, and there are one or more memories.

Optionally, the memory may be integrated with the processor, or the memory and the processor are separately disposed.

Optionally, the communication device further includes a transmitter (transmitting device) and a receiver (receiving device).

According to a ninth aspect, a computer program product is provided. The computer program product includes a computer program (which may also be referred to as code or instructions). When the computer program is run, a computer is enabled to perform the communication method in any one of the first aspect to the fourth aspect or the implementations of the first aspect to the fourth aspect.

According to a tenth aspect, a communication system is provided. The system includes at least one apparatus configured to perform the method in the first aspect and the implementations of the first aspect.

Optionally, the communication system further includes at least one apparatus configured to perform the method in the second aspect and the implementations of the second aspect.

According to an eleventh aspect, a communication system is provided. The system includes at least one apparatus configured to perform the method in the second aspect and the implementations of the second aspect.

Optionally, the communication system further includes at least one apparatus configured to perform the method in the first aspect and the implementations of the first aspect.

According to a twelfth aspect, a communication system is provided. The system includes at least one apparatus configured to perform the method in the third aspect and the implementations of the third aspect.

Optionally, the communication system further includes at least one apparatus configured to perform the method in the fourth aspect and the implementations of the fourth aspect.

According to a thirteenth aspect, a communication system is provided. The system includes at least one apparatus configured to perform the method in the fourth aspect and the implementations of the fourth aspect.

Optionally, the communication system further includes at least one apparatus configured to perform the method in the third aspect and the implementations of the third aspect.

According to a fourteenth aspect, a chip system is provided, including a memory and a processor. The memory is configured to store a computer program, and the processor is configured to invoke the computer program from the memory and run the computer program, so that a device on which the chip system is installed performs the communication method in the first aspect and the implementations of the first aspect.

The chip system may include an input circuit or interface configured to send information or data, and an output circuit or interface configured to receive information or data.

**BRIEF DESCRIPTION OF DRAWINGS**

FIG. 1 is a schematic diagram of a system architecture according to an embodiment of this application;

FIG. 2 is a schematic diagram of a basic process in which a network device obtains CSI of a downlink channel according to an embodiment of this application;

FIG. 3 is a schematic diagram of a process of cooperation between semi-persistent CSI-RS and semi-persistent CSI reporting;

FIG. 4 is a schematic diagram of a configuration process of configuration information of semi-persistent CSI-RS-based semi-persistent CSI reporting;

FIG. 5 is a schematic diagram of a configuration process of configuration information of semi-persistent CSI-RS-based aperiodic CSI reporting;

FIG. 6 is a schematic diagram of an example of a method for triggering CSI reporting according to an embodiment of this application;

FIG. 7 is a schematic diagram of an example of a process of cooperation between long-term semi-persistent CSI reporting and short-term semi-persistent CSI reporting of a semi-persistent CSI-RS according to an embodiment of this application;

FIG. 8 is a schematic diagram of an example of a process for configuring configuration information of long-term semi-persistent CSI reporting and short-term semi-persistent CSI reporting according to an embodiment of this application;

FIG. 9A and FIG. 9B are a schematic diagram of an example of a process for configuring configuration information of long-term semi-persistent CSI reporting and short-term aperiodic CSI reporting according to an embodiment of this application;

FIG. 10 is a schematic diagram of another example of a process for configuring long-term semi-persistent CSI reporting and short-term semi-persistent CSI reporting according to an embodiment of this application;

FIG. 11 is a schematic diagram of another example of a process for configuring long-term semi-persistent CSI reporting and short-term aperiodic CSI reporting according to an embodiment of this application;

FIG. 12 is a schematic diagram of an example of a codebook configuration method according to an embodiment of this application;

FIG. 13 is a schematic diagram of an example of a communication apparatus according to an embodiment of this application;

FIG. 14 is a schematic diagram of another example of a communication apparatus according to an embodiment of this application; and

FIG. 15 is a schematic diagram of still another example of a communication apparatus according to an embodiment of this application.

## DESCRIPTION OF EMBODIMENTS

The following describes technical solutions of embodiments in this application with reference to accompanying drawings.

The technical solution in embodiments of this application may be applied to various communication systems, for example, a global system for mobile communication (Global System for Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, and a 5th generation (5th Generation, 5G) system or a new radio (New Radio, NR) system.

Optionally, in the communication system to which embodiments of this application are applied, an entity needs to send transmission direction indication information, and another entity needs to receive the indication information, and determine a transmission direction within specific duration based on the indication information.

A terminal device in embodiments of this application may be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a 5G network, a terminal device in an evolved public land mobile network (Public Land Mobile Network, PLMN), or the like. This is not limited in embodiments of this application.

A network device in embodiments of this application may be a device configured to communicate with a terminal device. The network device may be a base transceiver station (Base Transceiver Station, BTS) in the global system for mobile communication (Global System of Mobile communication, GSM) or the code division multiple access (Code Division Multiple Access, CDMA) system, a NodeB (NodeB, NB) in the wideband code division multiple access (Wideband Code Division Multiple Access, WCDMA) system, an evolved NodeB (Evolutional NodeB, eNB or eNodeB) in the LTE system, or a radio controller in a cloud radio access network (Cloud Radio Access Network, CRAN) scenario. Alternatively, the network device may be a relay station, an access point, a vehicle-mounted device, a wearable device, a network device in a 5G network, a network device in an evolved PLMN network, or the like. This is not limited in embodiments of this application.

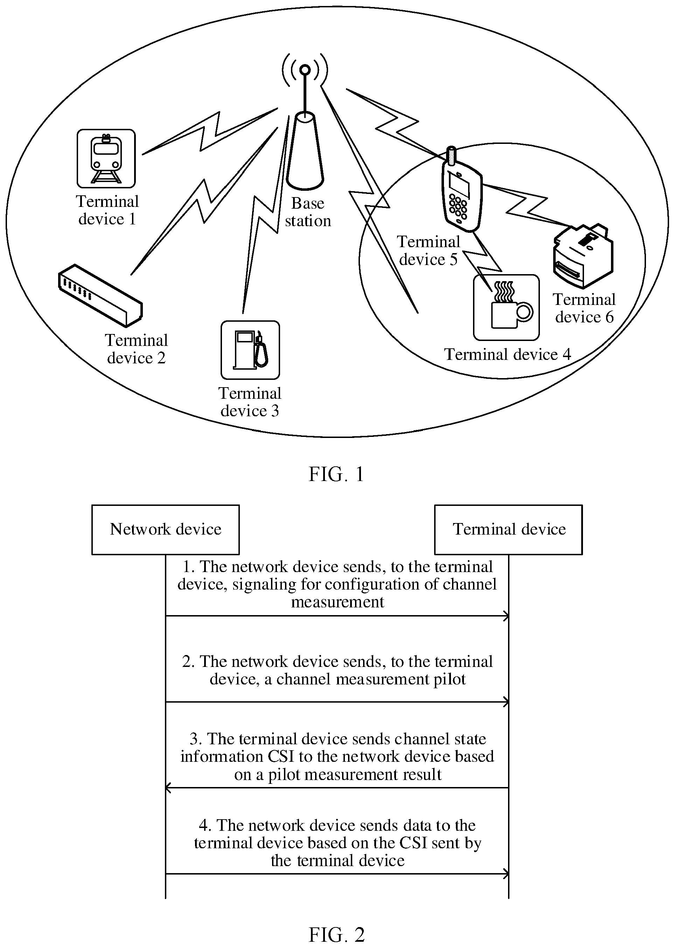

FIG. 1 is a schematic diagram of a system architecture according to an embodiment of this application. As shown in FIG. 1, the communication system includes a base station (or a network device) and one or more terminal devices (for example, terminal devices 1 to 6). In the communication system, the plurality of terminal devices may send uplink information to the network device, and the network device needs to receive the uplink information of the plurality of terminal devices. In addition, the plurality of terminal devices in the communication system may further form a communication system. For example, the terminal device 4, the terminal device 5, and the terminal device 6 may form a communication system. In the communication system, the network device may send downlink information to the terminal device 1, the terminal device 2, the terminal device 5, and the like. The terminal device 5 may also send the downlink information to the terminal device 4 and the terminal device 6.

Network elements in embodiments of this application are as follows:
RRC (Radio Resource Control, radio resource control) signaling interaction module: The RRC signaling interaction module is used by a network device and a terminal device to send and receive RRC signaling.

MAC (Media Access Control, Media Access Control) signaling interaction module: The MAC signaling interaction module is used by a network device and a terminal device to send and receive MAC-CE signaling.

PHY (Physical Layer, physical layer) signaling and data interaction module: The PHY signaling and data interaction module is used by a network device and a terminal device to send and receive uplink control signaling, downlink control signaling, uplink data, or downlink data.

Based on the foregoing network elements, a basic process in which a network device obtains CSI of a downlink channel in an embodiment of this application is shown in FIG. 2. Particularly, FIG. 2 shows a basic process in which a network device obtains CSI of a downlink channel in a conventional FDD system. As shown in FIG. 2, a terminal device needs to feedback the CSI of the downlink channel to the network device. The following process are to be performed to achieve this objective.

1. The network device sends, to the terminal device, signaling for configuration of channel measurement. Optionally, the signaling may be RRC signaling.
2. The network device sends, to the terminal device, a channel measurement pilot.

Specifically, the network device sends, to the terminal device, a CSI-RS (Channel State Information Reference Signal, channel state information reference signal) resource for CSI measurement.

It should be noted that the CSI-RS resource may also be referred to as a channel measurement pilot.

Optionally, signaling for sending the CSI-RS resource may be MAC-CE signaling.

3. The terminal device sends the CSI to the network device based on a pilot measurement result.

4. The network device sends data to the terminal device based on the CSI sent by the terminal device.

CSI-RS resource delivery and CSI reporting each have three types: periodic, semi-persistent, and aperiodic.

It should be noted that, in a protocol, the three types of CSI-RS resource delivery and CSI reporting may not be randomly combined. Combinations of the types of CSI-RS resource delivery and CSI reporting are shown in Table 1.

**Table 1**

|  | Periodic CSI reporting | Semi-persistent CSI reporting | Aperiodic CSI reporting |
|---|---|---|---|
| Periodic CSI-RS | Can be combined | Can be combined | Can be combined |
| Semi-persistent CSI-RS | Cannot be combined | Can be combined | Can be combined |
| Aperiodic CSI-RS | Cannot be combined | Cannot be combined | Can be combined |

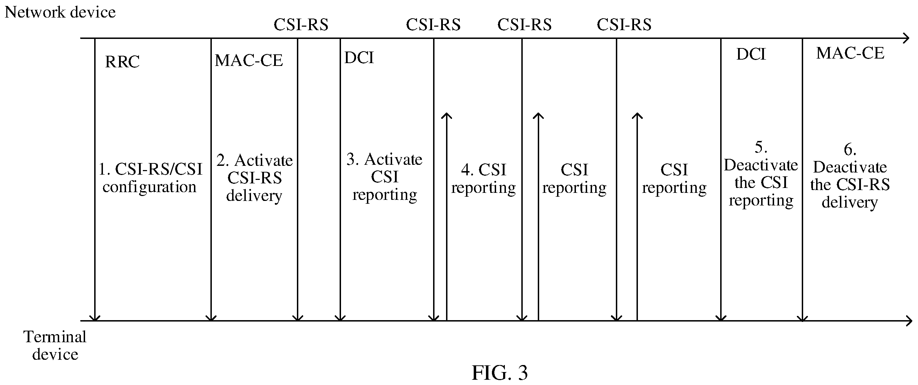

The following specifically describes, with reference to FIG. 3, FIG. 4, and FIG. 5, meanings of the three types: periodic, semi-persistent, and aperiodic.

FIG. 3 is a schematic diagram of a process of cooperation between semi-persistent CSI-RS delivery and semi-persistent CSI reporting.

More specifically, the process shown in FIG. 3 is an example of semi-persistent CSI-RS delivery and semi-persistent CSI reporting on a PUSCH.

As shown in FIG. 3, the process of cooperation includes the following steps.

1. A network device sends CSI-RS/CSI reporting configuration information to a terminal device by using RRC signaling.
It should be noted that the configuration information is mainly configuration information of a CSI-RS resource, and the like. Details are not described herein in this embodiment of this application.
2. The network device notifies, by using a first MAC-CE message, the terminal device to deliver the CSI-RS resource, and delivers the CSI-RS resource based on configuration of the first MAC-CE message.

Specifically, the first MAC-CE message is for triggering CSI-RS resource delivery. Optionally, the first MAC-CE message indicates configuration information of a CSI-RS resource. When the first MAC-CE message indicates the configuration information of the CSI-RS resource, CSI-RS resource delivery is triggered by default.

Specifically, semi-persistent CSI-RS delivery means that the first MAC-CE message for triggering or activating CSI-RS resource delivery activates first-time CSI-RS resource delivery; then the CSI-RS resource is periodically delivered based on a periodicity configured by using the first MAC-CE message, where the periodically delivered CSI-RS resource does not need to be activated by using a separate MAC-CE message; and the CSI-RS resource stops being periodically delivered until the network device deactivates CSI-RS resource delivery by using a second MAC-CE message that is for deactivating CSI-RS resource delivery.

3. The network device activates, by using first downlink control information DCI, the terminal device to perform the CSI reporting.

Specifically, the first DCI is for triggering the CSI reporting. Optionally, the first DCI indicates the CSI reporting configuration information. That the first DCI indicates the CSI reporting configuration information means that the CSI reporting is triggered by default.

Specifically, semi-persistent CSI reporting means that first-time CSI reporting is activated by using a first DCI message for triggering or activating the CSI reporting; then the CSI reporting is periodically reported based on a periodicity configured by using the first DCI, where the periodically reported CSI does not need to be activated by using a separate DCI message; and the CSI stops being periodically reported until the network device deactivates the CSI reporting by using a second DCI message that is for deactivating CSI reporting.

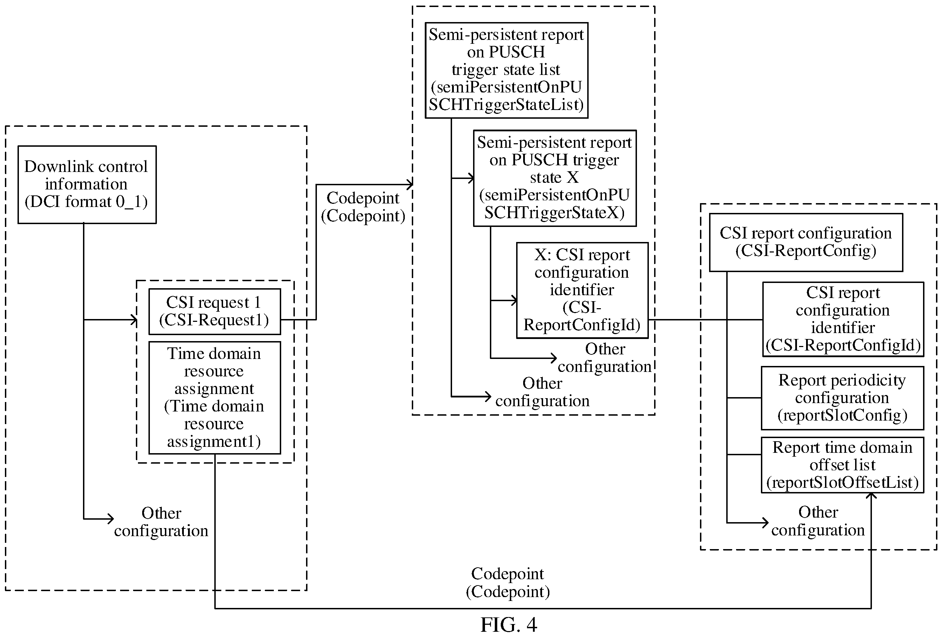

Specifically, content related to the CSI reporting configuration information or fields included in the first DCI is shown in FIG. 4. FIG. 4 is a schematic diagram of a configuration process of configuration information of semi-persistent CSI-RS-based semi-persistent CSI reporting.

As shown in FIG. 4, the first DCI may be DCI format 0_1 or DCI format 0_2 information, and the first DCI includes a CSI request (CSI Request) field.

Specifically, the first DCI is for activating CSI reporting. More specifically, the first DCI activates the CSI reporting by indicating CSI reporting configuration information. In other words, a terminal device receives the first DCI, and obtains the CSI reporting configuration information via an indication in the first DCI, where obtaining the CSI reporting configuration information means that CSI reporting is activated by default.

It should be noted that, in this embodiment of this application, activating the CSI reporting may also be referred to as triggering the CSI reporting. This name is not specifically limited in this embodiment of this application, provided that the meanings of the expressions are the same.

Specifically, the CSI request field is associated with a trigger state TriggerState in a semi-persistent on PUSCH reporting trigger state list semiPersistentOnPUSCHTriggerStateList by using configuration of a codepoint codepoint.

It should be noted that the CSI request field may occupy a maximum of six bits, and is configured by using a higher layer parameter report trigger size (reportTriggerSize). The six bits may be associated with a maximum of 64 types of trigger states in the semiPersistentOnPUSCHTriggerStateList, and further, may be associated with 64 types of CSI reporting configuration information.

In an example instead of a limitation, if the CSI request field has six bits, which are 000000, and a corresponding value may be 0. In this case, the CSI request field may be associated with trigger state 1 TriggerState 1 in the semiPersistentOnPUSCHTriggerStateList via a codepoint. It should be noted that a correspondence between a value of the bit and the trigger state is applicable to the semiPersistentOnPUSCHTriggerStateList.

Specifically, a CSI reporting configuration identifier (CSI-ReportConfigId) of the CSI reporting configuration information associated with each TriggerState of the semiPersistentOnPUSCHTriggerStateList is associated with the CSI reporting configuration information CSI-ReportConfig by using the CSI-ReportConfigId. The CSI-ReportConfig specifically includes a CSI reporting periodicity (ReportSlotConfig), a CSI reporting time domain offset list (reportSlotOffsetList), CSI-RS resource configuration (CSI-RS resource Config), and the like.

Specifically, the first DCI further includes a time domain resource assignment (Time domain resource assignment) field. The time domain resource assignment field dissociates one of the foregoing reportSlotOffsetList by using configuration of a codepoint, and determines a time domain offset of the value CSI reporting in the list. Optionally, the time domain offset may be a slot plus n slots after the DCI is received, and the slot is a time point for which first-time CSI reporting is performed.

According to the foregoing steps, the following CSI reporting configuration information can be obtained: the time domain offset of the CSI reporting, CSI-RS resource configuration, and the reporting periodicity of the CSI reporting.

It should be noted that, if the CSI reporting is semi-persistent CSI reporting on a PUCCH, the CSI reporting needs to be activated or triggered by using a MAC-CE message. Optionally, the CSI reporting configuration information is indicated by using the MAC-CE information.

It should be noted that CSI reporting on a PUSCH is used as an example for description in this embodiment of this application. The method steps in this embodiment of this application may also be applied to the CSI reporting on a PUCCH. This is not limited in this embodiment of this application.

4. The terminal device performs CSI reporting based on configuration of the first DCI.

It should be understood that the terminal device performs first-time CSI reporting based on the time domain offset in the CSI reporting configuration information configured by using the first DCI, and then periodically reports CSI based on the reporting periodicity in the CSI reporting configuration information configured by using the first DCI.

5. The network device sends second DCI to the terminal device to deactivate the CSI reporting.

6. The network device notifies, by using the second MAC-CE message, the terminal device to deactivate CSI-RS delivery.

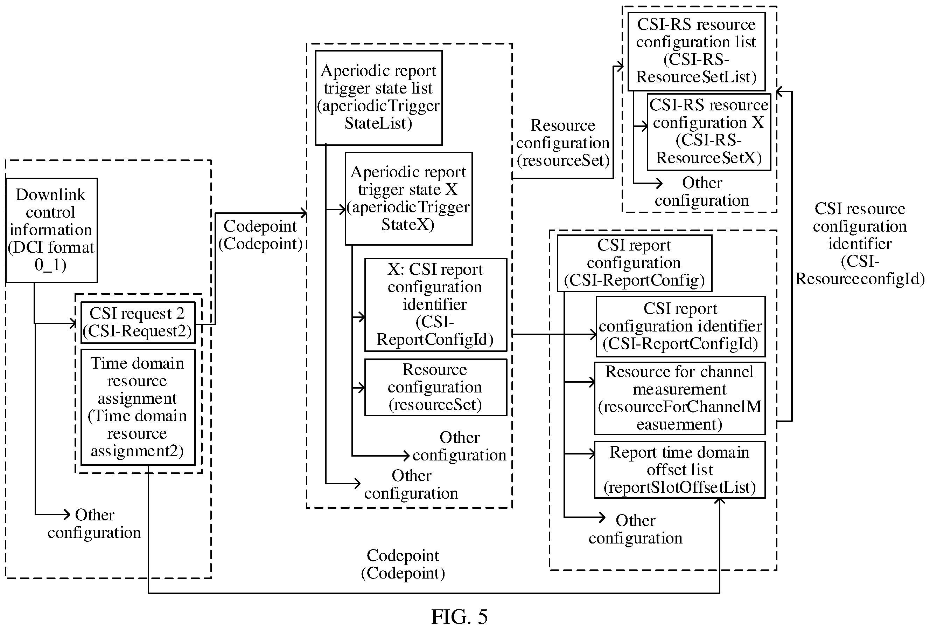

FIG. 5 is a schematic diagram of a configuration process of configuration information of semi-persistent CSI-RS-based aperiodic CSI reporting. As shown in FIG. 5, aperiodic CSI reporting is activated or triggered by using third DCI, and specific steps are similar to those shown in FIG. 3.

Specifically, the third DCI may be DCI format 0_1 or DCI format 0_2 information, and the third DCI also includes a CSI request field.

Specifically, the CSI request field is associated with a trigger state TriggerState in an aperiodic trigger state list aperiodicTriggerStateList via configuration of a codepoint.

It should be noted that a specific description of the CSI request field is similar to the description corresponding to FIG. 4. Details are not described herein again in this embodiment of this application.

It should be specially noted that, different from the configuration of semi-persistent CSI reporting, if the CSI request field has 6 bits, which are 000000, and a corresponding value may be 0, it indicates that CSI reporting is not performed; or if the 6 bits are 000001, and a corresponding value may be 1, the CSI request field may be associated with trigger state 1 TriggerState 1 in the aperiodicTriggerStateList via a codepoint.

It should be noted that a process of associating with the CSI-ReportConfigId by using the TriggerState is similar to the description corresponding to FIG. 4. Details are not described herein again in this embodiment of this application. It should be noted that the CSI request field may be associated with the CSI-ReportConfig by using the CSI-ReportConfigId.

Specifically, the CSI-ReportConfig specifically includes: a CSI reporting time domain offset list (reportSlotOffsetList), a CSI-RS resource configuration list CSI-RS-ResourceSetList, and the like. Similar to the description corresponding to FIG. 4, the third DCI further includes a time domain resource assignment (Time domain resource assignment) field, and the time domain resource assignment field dissociates one of the reportSlotOffsetList by using configuration of a codepoint, and determines that a time domain offset of the value CSI reporting in the list.

Specifically, the TriggerState further includes a resource configuration value ResourceSet, and that a resource in the CSI-RS-ResourceSetList is associated by using the ResourceSet is the CSI-RS resource configuration CSI-RS-ResourceSet of the CSI reporting this time.

According to the foregoing steps, the following CSI reporting configuration information can be obtained: the time domain offset of the CSI reporting and the CSI-RS resource configuration.

In some embodiments, it may be determined, based on content included in the CSI reporting configuration information and a configuration process, that a type of the CSI reporting is aperiodic CSI reporting.

Specifically, aperiodic CSI reporting means that the CSI reporting is activated only once by using the third DCI for activating CSI reporting, and there is no periodic CSI reporting subsequently.

With reference to related descriptions in FIG. 3, FIG. 4, and FIG. 5, the semi-persistent CSI-RS resource delivery, the semi-persistent CSI reporting, and the aperiodic CSI reporting are described. The following briefly describes aperiodic CSI-RS resource delivery, periodic CSI-RS resource delivery, and periodic CSI reporting.

It should be understood that the aperiodic CSI-RS resource delivery is similar to the aperiodic CSI reporting, which means that the network device activates CSI-RS delivery only once by using the third MAC-CE message, and there is no periodic CSI-RS delivery subsequently.

It should be understood that the periodic CSI-RS resource delivery and the periodic CSI reporting do not need to be activated by using DCI or a MAC-CE message, and periodic delivery or reporting needs to be performed based on a preset periodicity and a preset time domain offset.

It can be learned from the foregoing description that sending of downlink control information once can trigger or activate only one piece of or one type of CSI reporting.

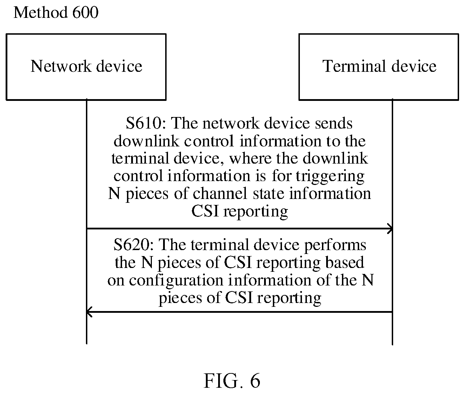

FIG. 6 is a schematic diagram of an example of a method for triggering CSI reporting according to an embodiment of this application. As shown in FIG. 6, the method 600 includes the following steps.

S610: A network device sends downlink control information to a terminal device.

Correspondingly, the terminal device receives the downlink control information sent by the network device.

Specifically, the downlink control information is for triggering N pieces of CSI reporting, or the downlink control information is for activating the N pieces of CSI reporting, where N is a positive integer greater than 1.

In other words, the downlink control information is for triggering a plurality of pieces of CSI reporting.

In some embodiments, the downlink control information indicates N pieces of CSI reporting configuration information, and the N pieces of CSI reporting configuration information is in a one-to-one correspondence with the N pieces of CSI reporting.

Optionally, that the downlink control information indicates the N pieces of CSI reporting configuration information means that the N pieces of CSI reporting are triggered or activated.

In other words, the terminal device receives the downlink control information, and obtains, based on an indication of the downlink control information, the N pieces of CSI reporting configuration information. This means that the N pieces of CSI reporting are triggered or activated by default. Further, CSI reporting is performed by using corresponding CSI reporting configuration information.

Specifically, content of the CSI reporting configuration information includes one or more of the following: a reporting periodicity, a time domain offset, a measurement resource, and reporting content.

Optionally, the content of the N pieces of CSI reporting configuration information are different from each other. Optionally, at least one of the content of the N pieces of CSI reporting configuration information is different.

Specifically, the reporting periodicity may be a periodicity of the semi-persistent CSI reporting described above.

Optionally, the N pieces of CSI reporting may include a plurality of pieces of semi-persistent CSI reporting with different reporting periodicities.

Optionally, steps of determining the reporting periodicity may be the steps of determining the reporting periodicity of the semi-persistent CSI reporting described above.

Optionally, the steps of determining the reporting periodicity may alternatively be other determining steps that are reset.

Optionally, corresponding to an existing protocol, the reporting periodicity may be configured by using the ReportSlotConfig.

Specifically, the time domain offset may be the time domain offset of the semi-persistent CSI reporting described above, or the time domain offset may be the time domain offset of the aperiodic CSI reporting described above.

Optionally, steps of determining the time domain offset may be the steps of determining the time domain offset of the semi-persistent or the aperiodic CSI reporting described above.

Optionally, the steps of determining the time domain offset may alternatively be other determining steps that are reset.

Optionally, corresponding to the existing protocol, the time domain offset may be configured by using a report-SlotOffset.

Specifically, the measurement resource may be the CSI-RS resource configuration of the semi-persistent CSI reporting described above, or the measurement resource may be the CSI-RS resource configuration of the aperiodic CSI reporting described above.

Optionally, determining of the measurement resource may be the determining of the CSI-RS resource configuration of the semi-persistent CSI reporting or the aperiodic CSI reporting described above.

Optionally, the steps of determining the measurement resource may alternatively be other determining steps that are reset.

Optionally, corresponding to the existing protocol, the measurement resource may be configured by using CSI-RS resource Config (corresponding to the semi-persistent CSI reporting) or a CSI-RS-ResourceSet (corresponding to the aperiodic CSI reporting).

Specifically, the reporting content is reporting content of CSI reporting.

Optionally, configuration of the reporting content of the CSI reporting may be completed by using a one-bit reporting content indication field in the downlink control information.

Optionally, the configuration of the reporting content of the CSI reporting may be completed by using a one-bit reporting content indication field in a trigger state associated with the downlink control information.

Optionally, the configuration of the reporting content of the CSI reporting may be configured by using a parameter reporting quantity reportQuantity in other configuration of CSI-ReportConfig. Specifically, if the reportQuantity is set to "cri-RI-PMI-CQI", the terminal device performs short-term reporting by default, and reporting content includes an RI (Rank Indicator, rank indicator), a PMI (Precoding Matrix Indicator, precoding matrix indicator), and a CQI (Channel Quality Indicator, channel quality indicator). Optionally, the reporting content further includes a CRI (CSI-RS Resource Indicator, CSI-RS resource indicator). If the reportQuantity is set to "cri-PMI", the terminal device performs long-term reporting by default, reporting content is a PMI. Optionally, the reporting content further includes a CRI.

By way of example rather than limitation, in this embodiment of this application, to reflect differences of reporting content in names, two types of CSI reporting with different reporting content are respectively referred to as long-term CSI reporting and short-term CSI reporting (two types of reporting content are used as an example for description herein, and there may be other names if there are more than two types of reporting content).

It should be understood that the names are merely for ease of description and differentiation, and the names are not limited in this embodiment of this application.

In this embodiment of this application, long-term semi-persistent CSI reporting, short-term semi-persistent CSI reporting, and short-term aperiodic CSI reporting are mainly described.

It should be understood that there may also be another combination of CSI reporting. This is not limited in this embodiment of this application.

Optionally, one-bit reporting content may indicate a name corresponding to the reporting content.

Corresponding to the foregoing example, the one-bit reporting content indication field may indicate that the CSI reporting is long-term or short-term, and the terminal device determines reporting content by default.

For example, when a value of one bit corresponding to the reporting content indication field is 0, it indicates long-term reporting. When a value of the one bit corresponding to the reporting content indication field is 1, it indicates short-term reporting. The terminal device performs reporting based on the reporting content corresponding to the long-term and the short-term.

Optionally, the one-bit reporting content indication field may indicate specific reporting content of the CSI reporting.

It should be noted that some reporting content of prior CSI reporting can provide base information for subsequent CSI reporting, so that accuracy of precoding matrix reconstruction or channel reconstruction performed by the network device is improved.

In this embodiment of this application, reporting content of long-term CSI reporting is preferentially set to provide measurement information for short-term CSI reporting.

Therefore, in some implementations, by configuring the time domain offset, a reporting time point of the long-term CSI reporting is set to be earlier than a reporting time point of the short-term CSI reporting, to provide base information for the short-term CSI reporting.

For example, if DCI triggers both the long-term semi-persistent CSI reporting and the short-term semi-persistent CSI reporting at the same time, the network device configures, during configuration, a time domain offset of the long-term semi-persistent CSI reporting less than a time domain offset of the short-term semi-persistent CSI reporting.

For another example, if the DCI triggers both the long-term semi-persistent CSI reporting and the short-term aperiodic CSI reporting at the same time, the network device configures, during configuration, the time-domain offset of the long-term semi-persistent CSI reporting less than a time-domain offset of the short-term aperiodic CSI reporting.

Optionally, for semi-persistent CSI reporting, long-term may mean that a reporting periodicity of the long-term semi-persistent CSI reporting is long, and short-term may mean that a reporting periodicity of the short-term semi-persistent CSI reporting is short.

Optionally, the long-term may alternatively mean that reporting content needs to be measured for long-term. Optionally, a measurement amount that needs to be measured for the reporting content may change slowly. The short-term may alternatively mean that reporting content needs to be measured for short-term. Optionally, a measurement amount that needs to be measured for the reporting content may change quickly.

Therefore, the reporting content corresponding to the long-term needs to be reported once for long-term, and the reporting content corresponding to the short-term needs to be reported once for short-term.

It should be noted that, corresponding to a periodicity, the long or short of the long-term or the short-term may be relative.

For example, when the long-term and the short-term correspond to the reporting periodicity of the semi-persistent CSI reporting, a periodicity threshold is defined. When the reporting periodicity of the semi-persistent CSI reporting exceeds the periodicity threshold, the periodicity is long. When the reporting periodicity of the semi-persistent CSI reporting does not exceed or is equal to the threshold, the periodicity is short.

By way of example rather than limitation, the reporting content indication field may be combined with configuration of the reporting quantity reportQuantity to determine the reporting content.

For example, for a CJT (Coherent Joint Transmission, coherent joint transmission) transmission solution of a space-frequency joint base, if the reportQuantity is set to 'cri-RI-PMI-CQI' and indicates long-term CSI reporting, the terminal device reports information about the space-frequency joint base; and if the reportQuantity is set to "cri-RI-PMI-CQI" and indicates short-term CSI reporting, the terminal device reports superposition coefficient information.

For example, when the information about the space-frequency joint base is reported in the long-term CSI reporting, the short-term CSI reporting uses the space-frequency joint base reported in the long-term CSI reporting as a base, to obtain and report the superposition coefficient information, so that the reported superposition coefficient is more accurate.

According to the method provided in this embodiment of this application, when both the long-term CSI reporting and the short-term CSI reporting are triggered or activated at the same time, reporting content of the long-term CSI that is reported first may provide some information for the short-term CSI reporting. Optionally, the information is base information, so that accuracy of precoding matrix reconstruction or channel reconstruction performed by the network device is improved.

It should be noted that, in this embodiment of this application, the steps of determining the CSI reporting configuration described in FIG. 3, FIG. 4, and FIG. 5 are used as a basis for improvement, to achieve the solution in this embodiment of this application. This application uses this as an example to describe the solution.

It should be understood that other steps that are reset and that are of determining reporting configuration of CSI reporting fall within the protection scope of this embodiment of this application, provided that the solution of this embodiment of this application can be achieved. This is not particularly limited in this embodiment of this application.

By way of example rather than limitation, when N is 2, it is assumed that the two pieces of CSI reporting are respectively the long-term semi-persistent CSI reporting and the short-term semi-persistent CSI reporting.

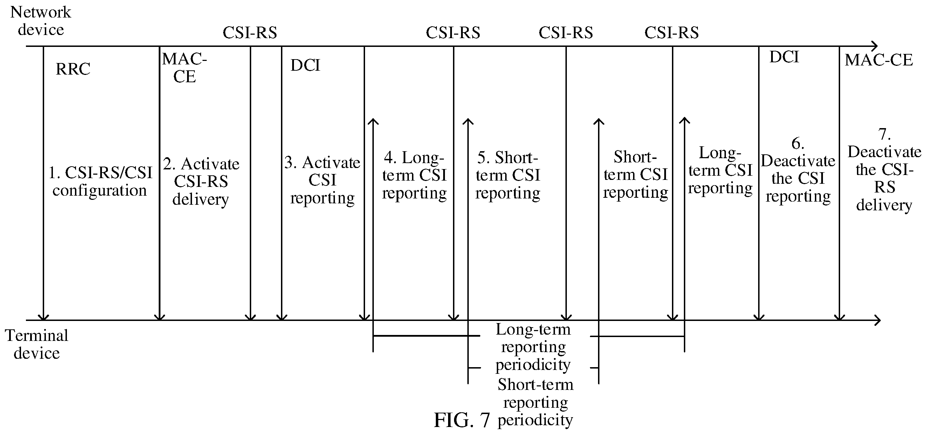

The following describes the solution of this embodiment of this application by using an example with reference to FIG. 7.

FIG. 7 is a schematic diagram of an example of a process for configuring long-term semi-persistent CSI reporting and short-term semi-persistent CSI reporting according to an embodiment of this application. As shown in FIG. 7, the process includes the following steps.

Because the process further includes downlink control information for deactivating CSI reporting, in descriptions of the process, the downlink control information for activating or triggering the CSI reporting is the downlink control information involved in the method 600, which is limited to first downlink control information, and optionally, is first DCI. The downlink control information for deactivating the CSI reporting is limited to second downlink control information, and optionally, is second DCI.

1. A network device sends configuration information of a CSI-RS or CSI reporting to a terminal device by using RRC signaling.

For detailed descriptions of this step, refer to step 1 in FIG. 3. Details are not described herein again.

2. The network device notifies, by using a first MAC-CE message, the terminal device to deliver a CSI-RS, and delivers the CSI-RS resource based on configuration of the first MAC-CE message.

For detailed descriptions of this step, refer to step 2 in FIG. 3. Details are not described herein again.

3. The network device triggers, by using the first downlink control information, the terminal device to perform both long-term semi-persistent CSI reporting and short-term semi-persistent CSI reporting.

It should be noted that, while sending the first downlink control information to the terminal device, the network device triggers the terminal device to perform both long-term semi-persistent CSI reporting and short-term semi-persistent CSI reporting.

In FIG. 7, that time domain offsets of the long-term semi-persistent CSI reporting and the short-term semi-persistent CSI reporting are different. To be specific, a reporting time point of first-time long-term semi-persistent CSI reporting is earlier than a reporting time point of first-time short-term semi-persistent CSI reporting.

Optionally, a time domain offset of the long-term semi-persistent CSI reporting is less than a time domain offset of the short-term semi-persistent CSI reporting.

4. The terminal device performs long-term semi-persistent CSI reporting based on a CSI measurement result.

5. The terminal device performs short-term semi-persistent CSI reporting based on the CSI measurement result.

As shown in FIG. 7, the terminal device separately performs long-term semi-persistent CSI reporting and short-term semi-persistent CSI reporting based on the measurement result.

Optionally, a reporting periodicity of long-term semi-persistent CSI reporting is greater than a reporting periodicity of short-term semi-persistent CSI reporting.

It should be understood that, if in step 3, the network device triggers, by using the first downlink control information, the terminal device to perform long-term semi-persistent CSI reporting and short-term aperiodic CSI reporting, then in this step, the terminal device periodically performs long-term semi-persistent CSI reporting based on the measurement result and the reporting periodicity of the long-term semi-persistent CSI reporting, and the short-term aperiodic CSI reporting is reported only once when being triggered in step 3, and is not periodically reported in this step.

It should be understood that FIG. 7 provides a combination of N pieces of CSI reporting. For another combination, adaptive reporting may also be performed with reference to the process. This is not limited in this embodiment of this application.

6. The network device sends second downlink control information to the terminal device to deactivate both long-term semi-persistent CSI reporting and short-term semi-persistent CSI reporting.

7. The network device deactivates the CSI-RS delivery by using a second MAC-CE message.

Refer to Table 1. The CSI-RS delivery in this step may not be semi-persistent, provided that a type of the N pieces of CSI reporting can match a type of the CSI-RS delivery. This is not limited in this embodiment of this application.

The following describes in detail how the downlink control information triggers the N pieces of CSI reporting or how the downlink control information indicates reporting configuration of the N pieces of CSI reporting.

In some embodiments, the network device sets N pieces of indication information in the downlink control information. The N pieces of indication information are in a one-to-one correspondence with N trigger states in a trigger state list, where one trigger state corresponds to one piece of CSI reporting configuration information.

Optionally, that the N pieces of indication information are in a one-to-one correspondence with N trigger states in a trigger state list may be that the N pieces of indication information are in a one-to-one correspondence with N trigger states in one trigger state list.

Optionally, that the N pieces of indication information are in a one-to-one correspondence with N trigger states in a trigger state list may be that the N pieces of indication information are in a one-to-one correspondence with N trigger states in N trigger state lists.

Specifically, the N pieces of indication information correspond to N trigger state lists, and each piece of indication information of the N pieces of indication information corresponds to one trigger state in a corresponding trigger state list.

It should be noted that the trigger state list may be the foregoing semiPersistentOnPUSCHTriggerStateList, or may be the foregoing aperiodicTriggerStateList, or may be a trigger state list TriggerStateList that is reset.

It should be noted that the trigger state may be the foregoing TriggerState, or may be a trigger state that is reset.

This embodiment of this application is described by using an example in which a solution in which a minimum change is made to an existing protocol is used. However, this is not limited in this embodiment of this application.

Optionally, each piece of indication information of the N pieces of indication information may include one CSI request indication field.

It should be noted that the CSI request indication field may be the same as setting of the foregoing CSI request field, or may be an indication field that is reset. This is not limited in this embodiment of this application.

Optionally, each piece of indication information of the N pieces of indication information further includes a time domain offset indication field.

It should be noted that the time domain offset assignment field may be the same as the setting of the foregoing time domain resource assignment field, or the time domain offset assignment field may be an indication field that is reset. This is not limited in this embodiment of this application.

Optionally, each piece of indication information of the N pieces of indication information further includes a reporting content indication field.

Specifically, the reporting content indication field indicates reporting content of the CSI reporting, or the reporting content indication field indicates that the CSI reporting is long-term or short-term. For meanings of the long-term and the short-term, refer to the foregoing descriptions, and details are not described herein again.

Optionally, the reporting content indication field may further be included in a trigger state.

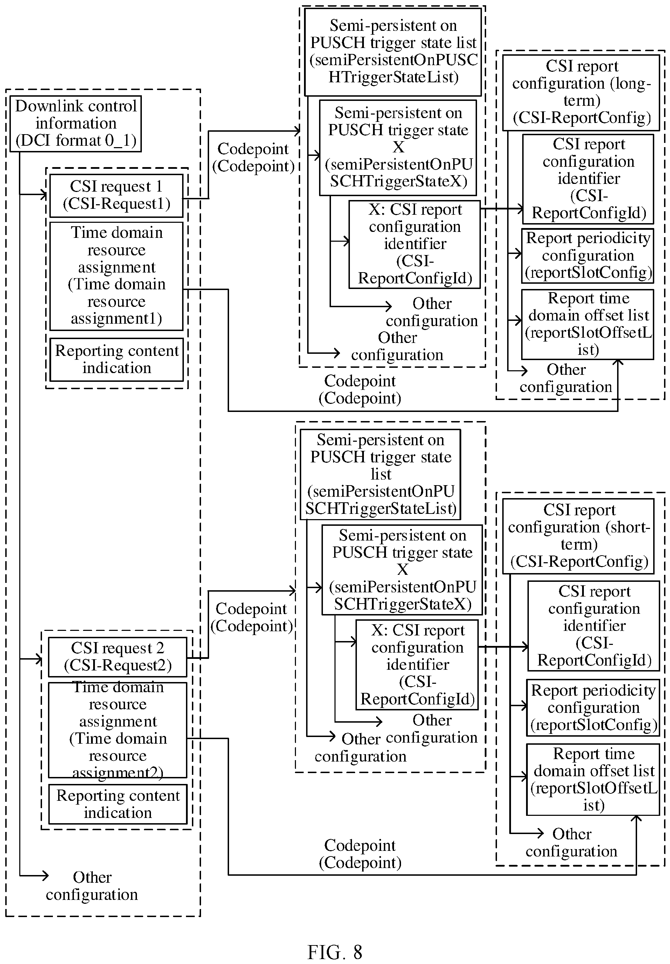

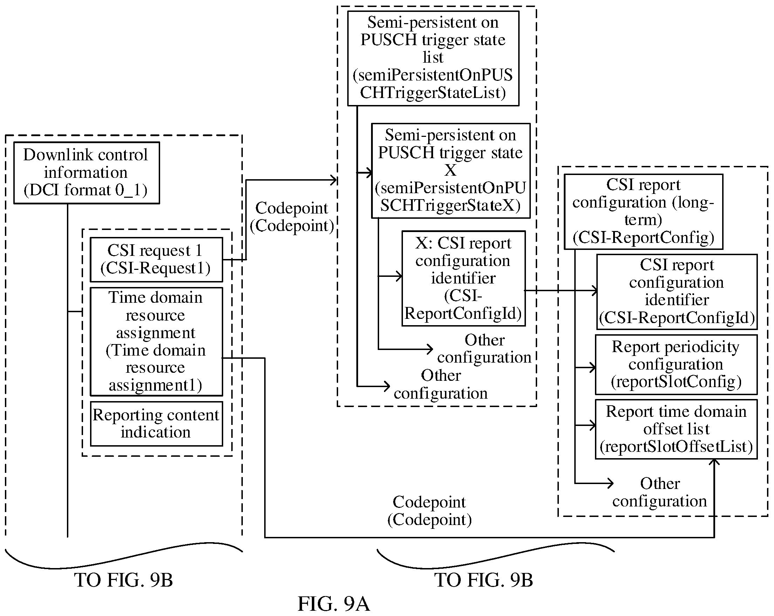

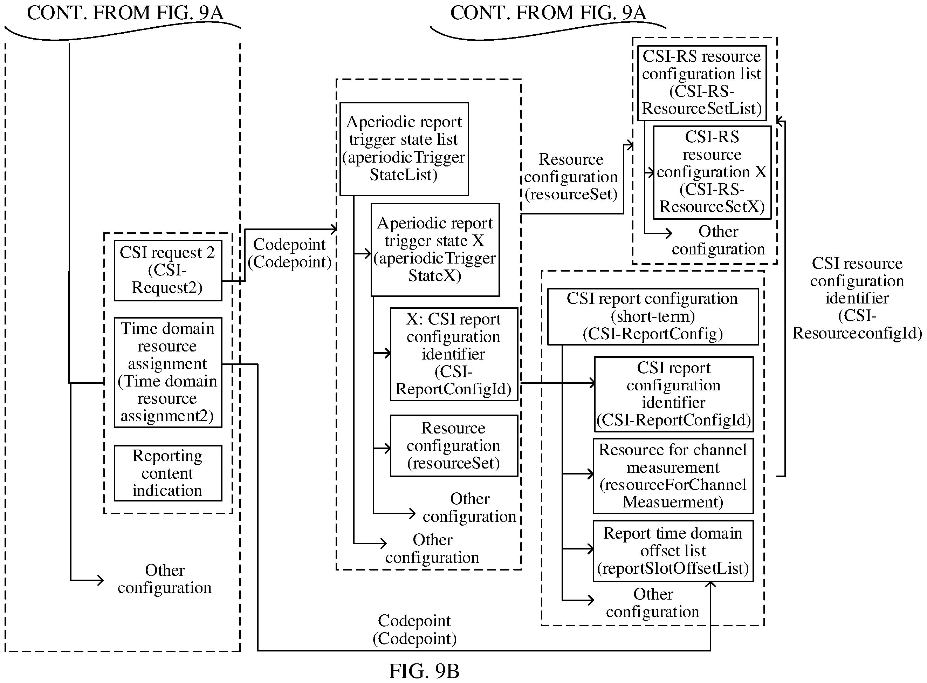

With reference to FIG. 8, and FIG. 9A and FIG. 9B, the following describes how the N pieces of indication information indicate the N pieces of CSI reporting configuration information or how to trigger the N pieces of CSI reporting.

An example in which N is equal to 2 is used for description.

It should be noted that, when N is greater than 2, description may be performed with reference to a step in which N is equal to 2. Details are not described in this embodiment of this application again.

FIG. 8 is a schematic diagram of an example of a process for configuring long-term semi-persistent CSI reporting and short-term semi-persistent CSI reporting according to an embodiment of this application.

FIG. 9A and FIG 9B are a schematic diagram of an example of a process for configuring long-term semi-persistent CSI reporting and short-term aperiodic CSI reporting according to an embodiment of this application.

As shown in FIG. 8, and FIG. 9A and FIG 9B, specifically, a process of determining reporting configuration of CSI reporting by using each piece of indication information is similar to the descriptions in FIG. 3, FIG. 4, and FIG. 5.

Specifically, a trigger state TriggerState in a trigger state list is associated with codepoint configuration of a CSI request field in each piece of indication information. Optionally, the trigger state list may be a semiPersistentOnPUSCHTriggerStateList. The TriggerState is associated with one CSI-ReportConfig, and cooperates with the time domain resource assignment, to determine configuration information of semi-persistent CSI reporting, to be specific, the ReportSlotConfig, the ReportSlotOffset and the CSI-RS ResourceConfig.

Alternatively, the trigger state TriggerState in the trigger state list is associated with the codepoint configuration of the CSI request field in each piece of indication information. Optionally, the trigger state list may be the aperiodicOnPUSCHTriggerStateList. The TriggerState is associated with one CSI-ReportConfig, and cooperates with the time domain resource assignment filed and the ResourceSet in the TriggerState associated with each CSI request, to determine configuration information of aperiodic CSI reporting, to be specific, the ReportSlotOffset and the CSI-RS-ResourceSet.

Optionally, the TriggerState in each piece of indication information or corresponding to each piece of indication information further includes a reporting content indication field.

It should be understood that the reporting content indication field may be CSI-TypeIndicate.

Optionally, the reporting content indication field may be independent of the CSI-Request and the time domain resource assignment field.

Optionally, the reporting content indication field may alternatively be included in the time domain resource assignment information, and is a newly added one bit in the time domain resource assignment information.

The foregoing steps are repeated to determine CSI reporting configuration information corresponding to each of the N pieces of indication information.

In some embodiments, the network device sets one piece of indication information in the downlink control information. The piece of indication information corresponds to one trigger state set in a trigger state list. The trigger state set includes N trigger states, or the trigger state set includes N cascaded trigger states.

One trigger state corresponds to one piece of CSI reporting configuration information.

It should be noted that the trigger state list may be the foregoing semiPersistentOnPUSCHTriggerStateList, or may be the foregoing aperiodicTriggerStateList, or may be a trigger state list TriggerStateList that is reset. The trigger state list includes a plurality of trigger state sets, and the trigger state set includes N trigger states.

Optionally, the trigger state set may be a TriggerStatePair, or may be another name that is reset.

It should be noted that, that the N trigger states may be considered as cascaded is that the trigger state set is virtual, and is actually N cascaded trigger states. The trigger state may be the foregoing TriggerState, or may be a trigger state that is reset.

This embodiment of this application is described by using an example in which a solution in which a minimum change is made to an existing protocol is used. However, this is not limited in this embodiment of this application.

Optionally, the piece of indication information may include a CSI request indication field.

It should be noted that the CSI request indication field may be the same as setting of the foregoing CSI request field, or may be an indication field that is reset. This is not limited in this embodiment of this application.

Optionally, the piece of indication information may further include N time domain offset indication fields.

It should be noted that the N time domain offset indication fields are in a one-to-one correspondence with N pieces of CSI reporting, and respectively indicate time domain offsets of the N pieces of CSI reporting.

Specifically, the N time domain offset indication fields respectively indicate a value in N ReportSlotOffsetLists or another time domain offset list that is reset.

Optionally, the N time domain offset indication fields may be included in a trigger state set associated with the piece of indication information.

Optionally, each of the N trigger states associated with the piece of indication information may include a time domain offset indication field, and the time domain offset indication field indicates a time domain offset of CSI reporting corresponding to the time domain offset indication field.

Optionally, only a time domain offset of CSI reporting with a minimum time domain in the N pieces of CSI reporting needs to be configured, and other CSI is sequentially shifted backward by x slots based on a sequential time domain offset.

Optionally, the time domain offset corresponding to the N pieces of CSI reporting may be default, and does not need to be indicated by the time domain offset indication field. Optionally, the piece of indication information may include N-1 relative time domain offset indication fields (fields). The relative time domain offset indication field indicates a time domain offset of N-1 pieces (pieces) of CSI reporting relative to a piece of CSI reporting. A time domain offset of the piece of CSI reporting is indicated by one time domain offset indication field. In other words, the piece of indication information indicates only a time domain offset of one piece of CSI reporting, and a time domain offset of another piece of CSI reporting is a relative value relative to the time domain offset of the piece of CSI reporting.

By way of example rather than limitation, if the downlink control information indicates two pieces of CSI reporting, to be specific, one piece of long-term CSI reporting, and one piece of short-term CSI reporting, the long-term CSI reporting may be set to be earlier than the short-term CSI reporting, and a relative time domain offset indication field is set, where the relative time domain offset indication field may be 2 bits. In addition, a relative time domain offset indication list is set, where the list may be included in the CSI reporting configuration, and elements in the list may be {X0, X1, X2, X3}. If a bit value of the relative time domain offset indication field is 11, a value X3 in the indication list indicates that a time domain offset difference between the short-term CSI reporting and the long-term CSI reporting is X3, in other words, a time domain offset of the short-term CSI reporting is X3 greater than a time domain offset of the long-term CSI reporting.

Optionally, the piece of indication information may further include N reporting content indication fields. The N reporting content indication fields are in a one-to-one correspondence with N pieces of CSI reporting, and respectively indicate reporting content of the N pieces of CSI reporting.

Optionally, the N reporting content indication fields may be included in a trigger state set associated with the piece of indication information.

Optionally, each of the N trigger states associated with the piece of indication information may include a reporting content indication field, which separately indicates reporting content of CSI reporting corresponding to the reporting content indication field.

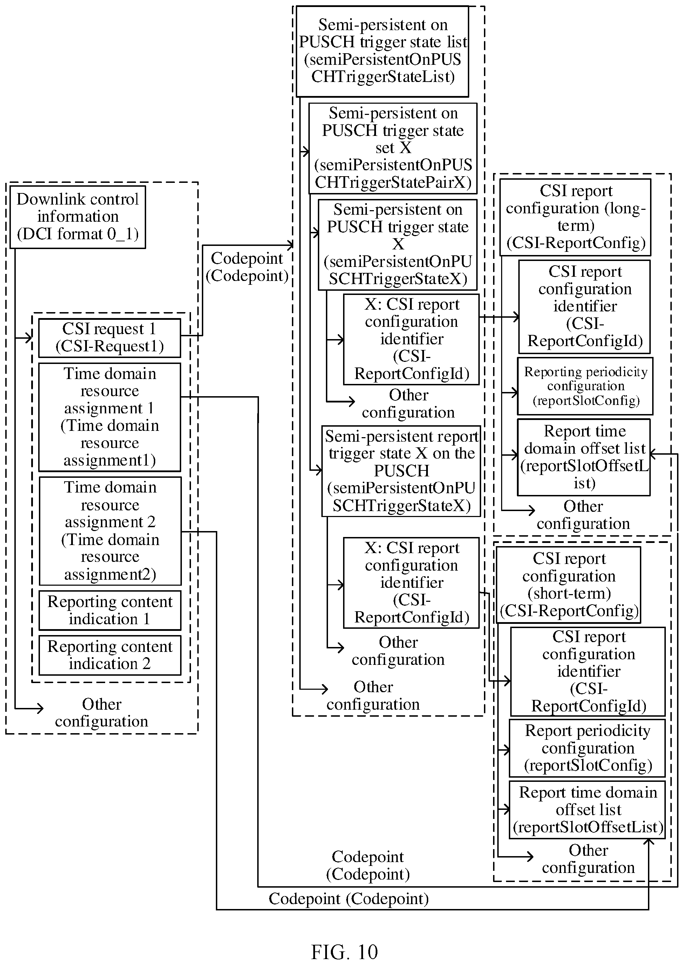

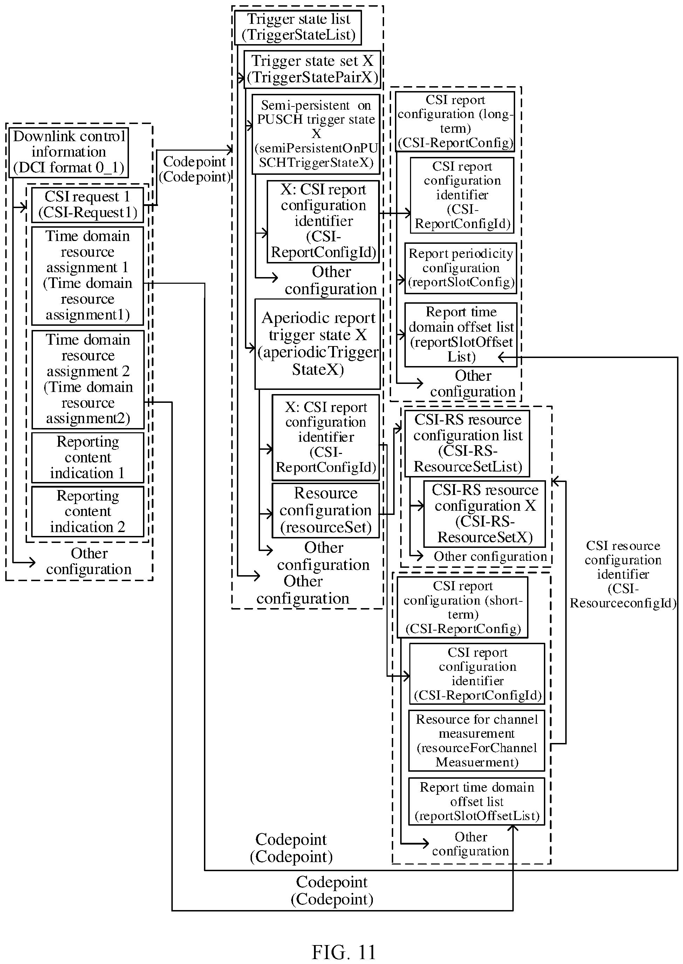

With reference to FIG. 10 and FIG. 11, the following describes how the piece of indication information indicates N pieces of CSI reporting configuration information or how to trigger the N pieces of CSI reporting.

An example in which N is equal to 2 is used for description.

It should be noted that, when N is greater than 2, description may be performed with reference to a step in which N is equal to 2. Details are not described in this embodiment of this application again.

FIG. 10 is a schematic diagram of another example of a process for configuring long-term semi-persistent CSI reporting and short-term semi-persistent CSI reporting according to an embodiment of this application.

FIG. 11 is a schematic diagram of another example of a process for configuring long-term semi-persistent CSI reporting and short-term aperiodic CSI reporting according to an embodiment of this application.

As shown in FIG. 10 and FIG. 11, the following describes this embodiment with reference to FIG. 3, FIG. 4, and FIG. 5.

Specifically, codepoint configuration of the CSI request field in the piece of indication information is associated with a trigger state set in a trigger state list TriggerStateList, and the trigger state set may be a TriggerStatePair. The trigger state set includes N TriggerStates, and the N TriggerStates are in a one-to-one correspondence with N pieces of CSI reporting. Each TriggerState is associated with one CSI-ReportConfig, and different types of reporting may be configured. For example, one TriggerState in a TriggerState pair is associated with the CSI-ReportConfig of semi-persistent CSI reporting, and the other TriggerState is associated with the CSI-ReportConfig of aperiodic CSI reporting.

Some configuration information of the semi-persistent CSI reporting, such as the ReportSlotConfig and the CSI-RS ResourceConfig, may be determined by using the CSI-ReportConfig of the semi-persistent CSI reporting.

Some configuration information of aperiodic CSI reporting, such as a CSI-RS-ResourceSet, may be determined by using the CSI-ReportConfig of the semi-periodic CSI reporting.

Each CSI-ReportConfig corresponding to the semi-persistent CSI reporting or the aperiodic CSI reporting corresponds to one ReportSlotOffsetList. Currently, two ReportSlotOffsetLists need to be corresponding, and the piece of indication information needs to be reset.

Optionally, the piece of indication information may be set to include two time domain offset indication fields, and the two time domain offset indication fields respectively correspond to two ReportSlotOffsetLists to obtain ReportSlotOffsets respectively corresponding to two pieces of CSI reporting.

Optionally, one trigger state set corresponding to the piece of indication information may be set to include two time domain offset indication fields, and the two time domain offset indication fields respectively correspond to two ReportSlotOffsetLists to obtain ReportSlotOffsets respectively corresponding to N pieces of CSI reporting (which is not shown in the figure).

Optionally, each of N trigger states that corresponds to the piece of indication information may be set to include a time domain offset indication field, and the time domain offset indication field indicates a ReportSlotOffset corresponding to the time domain offset indication field.

Optionally, reporting content further needs to be indicated.

Therefore, the piece of indication information needs to be reset.

Optionally, the piece of indication information may be set to include two reporting content indication fields, and the two reporting content indication fields respectively indicate reporting content of two pieces of CSI reporting.

Optionally, one trigger state set corresponding to the indication information may be set to include two reporting content indication fields, and the two reporting content indication fields respectively indicate reporting content of the two pieces of CSI reporting (which is not shown in the figure).

Optionally, each of two trigger states corresponding to the piece of indication information may be set to include a reporting content indication field, and the reporting content indication field respectively indicate reporting content of the two pieces of CSI reporting.

In the examples in FIG. 10 and FIG. 11, the reporting content indication information indicates that the semi-persistent CSI reporting is long-term, and the aperiodic CSI reporting is short-term.

S620: A terminal device performs the N pieces of CSI reporting based on the N pieces of CSI reporting configuration information.

Specifically, the terminal device performs measurement based on a configured CSI-RS resource, and then performs CSI reporting based on CSI reporting configuration information.

In the method for triggering channel state information CSI reporting provided in this embodiment of this application, a plurality of pieces of CSI reporting is triggered by using downlink control information, so that within a duration, the terminal device can report more CSI to a network device, and the network device can determine, based on the plurality of pieces of CSI reporting, reconstruction of a precoding matrix, so that reconstruction of the precoding matrix is more accurate, and system performance is improved. In some cases, prior CSI reporting can provide base information for subsequent CSI reporting, so that precoding matrix reconstruction performed by the network device is more accurate.

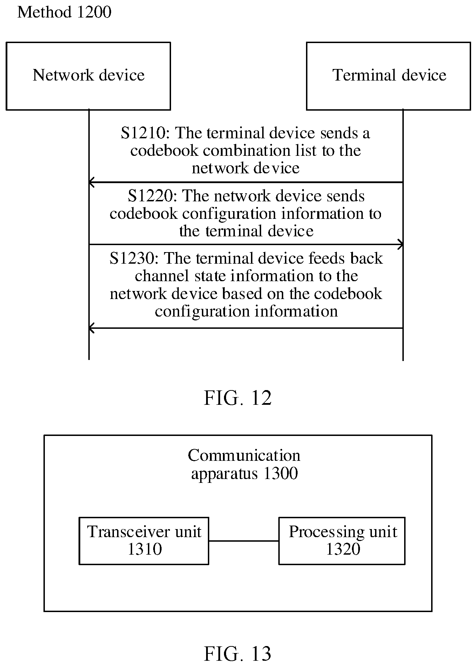

FIG. 12 is a schematic diagram of an example of a codebook configuration method according to an embodiment of this application.

It should be noted that, although FDD uplink and downlink channels are not completely reciprocal, a part of information of the FDD uplink and downlink channels are of reciprocity.

For example, reciprocity of an angle and reciprocity of a delay.

Therefore, the network device can perform channel estimation on an uplink channel, to obtain a part of prior information of a downlink channel based on estimated uplink channel information, for example, angle information and delay information of the downlink channel, so as to load the obtained angle information and delay information to a pilot of the downlink channel, and notify a terminal device to measure and feedback supplementary information required by a network device to reconstruct the downlink channel.

To control processing complexity of the terminal device, the terminal device reports a codebook type supported by the terminal device to the network device. The network device configures corresponding codebook configuration information for the terminal device based on the codebook type reported by the terminal device. The terminal device performs measurement based on the codebook configuration information configured by the network device, and feeds back corresponding channel state information.

Finally, the network device reconstructs, based on the channel state information fed back by the terminal device, the coding matrix used to send downlink service data. Currently, codebook types supported by the terminal device are a codebook 1, a codebook 2, and a codebook 3, and a codebook combination list reported by the terminal device to the network device may be {codebook 1, codebook 2, codebook 3}. For each codebook combination, the information list reported by the terminal device further includes a ternary information list {a maximum port quantity of each resource, a maximum resource quantity, and a maximum total port quantity} related to each codebook combination. Codebook types currently reported by the terminal device to the network device includes:

    type1SP-Type2-null-r16
    type1SP-Type2PS-null-r16
    type1SP-eType2R1-null-r16
    type1SP-eType2R2-null-r16
    type1SP-eType2R1PS-null-r16
    type 1 SP-eType2R2PS-null-r16
    type1SP-Type2-Type2PS-r16
    type 1MP-Type2-null-r16
    type 1MP-Type2PS-null-r16
    type 1MP-eType2R1-null-r16
    type 1MP-eType2R2-null-r16
    type 1MP-eType2R1PS-null-r16
    type 1MP-eType2R2P S -null-r 16
    type1MP-Type2-Type2PS-r16

The type1SP represents a codebook type of type1 single-panel in the 3GPP TS 38.214.

The type1MP represents a codebook type of type1 Multi-panel in the 3GPP TS 38.214.

The eType2R1 represents a codebook type of Enhanced TypeII in the 3GPP TS 38.214. In this case, a value of R is 1.

The eType2R2 represents a codebook type of Enhanced TypeII in the 3GPP TS 38.214. In this case, a value of R is 2.

The Type2PS represents a codebook type of TypeII Port Selection in the 3GPP TS 38.214.

The eType2R1PS represents a codebook type of Enhanced TypeII Port Selection in the 3GPP TS 38.214, and a value of R is 1.

The eType2R2PS represents a codebook type of Enhanced TypeII Port Selection in the 3GPP TS 38.214, and a value of R is 2.

It should be noted that, for a specific meaning of the foregoing codebook, refer to descriptions in related protocols. Details are not described herein in this application.

However, the foregoing codebook types do not consider reciprocity of an angle and a delay. Therefore, to make measurement performed by the terminal device simpler, a codebook type of reciprocity between an angle and a delay needs to be added.

As shown in FIG. 12, the method 1200 includes:

S1210: A terminal device sends a codebook combination list to a network device.

Specifically, the codebook combination list includes a first-type codebook.

Specifically, the first-type codebook is based on an angle-delay reciprocity.

In some embodiments, the codebook combination list including the first-type codebook may be in the following form:

    type 1 SP-FeType2M2R2-null
    type1SP-eType2R1-FeType2M2R2
    type1SP-eType2R2-FeType2M2R2
    type1MP-FeType2M2R2-null
    type1MP-eType2R1-FeType2M2R2
    type1MP-eType2R2-FeType2M2R2
    type1SP-FeType2M2R1-null

16

type1SP-eType2R1-FeType2M2R1
type1SP-eType2R2-FeType2M2R1
type1MP-FeType2M2R1-null
type1MP-eType2R1-FeType2M2R1
type1MP-eType2R2-FeType2M2R1
type1SP-FeType2M1R1-null
type1 SP-eType2R1-FeType2M1R1
type1SP-eType2R2-FeType2M1R1
type1MP-FeType2M1R1-null
type 1MP-eType2R1-FeType2M1R1
type1MP-eType2R2-FeType2M1R1
type1SP-FeType2M1R2-null
type1SP-eType2R1-FeType2M1R2

The FeType2M1 represents an angle-delay reciprocity-based R17 codebook. In this case, a value of M is 1.

The FeType2M2 represents an angle-delay reciprocity-based R17 codebook. In this case, a value of M is 2.

The FeType2M2R2 represents an angle-delay reciprocity-based R17 codebook. In this case, a value of M is 2, and a value of R is 2.

M and R are parameters that affect processing complexity of the terminal device.

It should be noted that, the codebook combination list in the foregoing example reflects values of M and R, and an information list reported by the terminal device for each codebook combination further includes a ternary information list {a maximum port quantity of each resource, a maximum resource quantity, a maximum total port quantity} related to each codebook combination.

In some embodiments, the codebook combination list may not include a value of R, and the value of R reported by the terminal device to the network device may be included in an information list related to each codebook combination reported by the terminal device, in other words, information about R is added to an original ternary information list, to generate a quaternary information list.

The quaternary information list may be: {a maximum port quantity of each resource, a maximum resource quantity, a maximum port total quantity, a value of $R$}.

Specifically, R represents a quantity of sub-band PMIs corresponding to each sub-band CQI.

For example, R may be $D * N_{PRB}^{SB}$, where D represents a density of a CSI-RS, and $N_{PRB}^{SB}$ represents a quantity of PRBs included in a subband CQI. A value of R may be 1 or 2.

S 1220: The network device sends codebook configuration information to the terminal device.

S 1230: The terminal device feeds back channel state information to the network device based on the codebook configuration information.

Specifically, the codebook configuration information is determined by the network device based on a codebook combination list.

Specifically, the terminal device feeds back, based on the codebook configuration information, the channel state information to the network device.

In the method provided in this embodiment of this application, when the terminal device feeds back the codebook combination list to the network device, considering that the terminal device can support a R17 codebook based on angle-delay reciprocity, the R17 codebook may be newly added to the codebook combination list, so that the network device configures corresponding codebook configuration information for a terminal, so that the terminal device can support the R17 codebook.

FIG. 13 is an example of a communication apparatus according to an embodiment of this application. As shown in FIG. 13, the communication apparatus 1300 includes a transceiver unit 1310 and a processing unit 1320.

In some embodiments, the communication apparatus 1300 may be configured to implement a function of the terminal device in any one of the foregoing methods. For example, the communication apparatus 1300 may correspond to a terminal device.

The communication apparatus 1300 may be a terminal device, and performs the steps performed by the terminal device in the foregoing method embodiments. The transceiver unit 1310 may be configured to support the communication apparatus 1300 in performing communication, for example, performing a sending and/or receiving action performed by the terminal device in the foregoing method embodiments. The processing unit 1320 may be configured to support the communication apparatus 1300 in performing a processing action in the foregoing method embodiments, for example, performing a processing action performed by the terminal device in the foregoing method embodiments.

Optionally, the communication apparatus may further include a storage unit 1330 (which is not shown in FIG. 13), configured to store program code and data of the communication apparatus.

For details, refer to the following descriptions.

The transceiver unit 1310 is configured to receive downlink control information sent by a network device.

The processing unit 1320 is configured to determine configuration information of N pieces of CSI reporting.

The transceiver unit 1310 is further configured to perform the N pieces of CSI reporting based on the N pieces of CSI reporting configuration information.

Specifically, the downlink control information is for triggering the N pieces of CSI reporting, and the N pieces of CSI reporting are in a one-to-one correspondence with the N pieces of CSI reporting configuration information indicated by the downlink control information.

Specifically, N is a positive integer greater than 1.

Optionally, the N pieces of CSI reporting configuration information are different from each other.

Specifically, the CSI reporting configuration information includes at least one of the following:

a reporting periodicity, a time domain offset, a measurement resource, and reporting content.

In some embodiments, the downlink control information includes N pieces of indication information, and the N pieces of indication information are in a one-to-one correspondence with N trigger states in a trigger state list, where one trigger state corresponds to one piece of CSI reporting configuration information.

Optionally, each of the N pieces of indication information includes a reporting content indication field, and the reporting content indication field indicates reporting content of CSI reporting.

Optionally, a trigger state corresponding to each of the N pieces of indication information includes a reporting content indication field, and the reporting content indication field indicates reporting content of CSI reporting.

In some embodiments, the downlink control information includes one piece of indication information. The piece of indication information corresponds to one trigger state set in a trigger state list, and the trigger state set includes N trigger states. One trigger state corresponds to one piece of CSI reporting configuration information.

Optionally, the piece of indication information includes N reporting content indication fields, the N reporting content indication fields are in a one-to-one correspondence with the N pieces of CSI reporting, and the reporting content indication field indicates reporting content of CSI reporting.

Optionally, each of the N trigger states that corresponds to the piece of indication information includes a reporting content indication field, and the reporting content indication field indicates content of the CSI reporting.

Optionally, the piece of indication information includes N time domain offset indication fields, the N time domain offset indication fields are in a one-to-one correspondence with the N pieces of CSI reporting, and the time domain offset indication field indicate a time domain offset for the CSI reporting.

In some embodiments, the communication apparatus 1300 may be configured to implement a function of a network device in any one of the foregoing methods. For example, the communication apparatus 1300 may correspond to the network device.

The communication apparatus 1300 may be a network device, and performs the steps performed by the network device in the foregoing method embodiments. The transceiver unit 1310 may be configured to support the communication apparatus 1300 in performing communication, for example, performing a sending and/or receiving action performed by the network device in the foregoing method embodiments. The processing unit 1320 may be configured to support the communication apparatus 1300 in performing a processing action in the foregoing method embodiments, for example, performing a processing action performed by the network device in the foregoing method embodiments.

Optionally, the communication apparatus may further include the storage unit 1330 (which is not shown in FIG. 13), configured to store program code and data of the communication apparatus.

For details, refer to the following descriptions.

The processing unit 1320 is configured to determine the downlink control information.

The transceiver unit 1310 is configured to send the downlink control information to the terminal device.

The transceiver unit 1310 is further configured to receive the N pieces of CSI reporting performed by the terminal device based on the N pieces of CSI reporting configuration information.

Specifically, the downlink control information is for triggering the N pieces of CSI reporting, and the N pieces of CSI reporting are in a one-to-one correspondence with the N pieces of CSI reporting configuration information indicated by the downlink control information.

Specifically, N is a positive integer greater than 1.

Optionally, the N pieces of CSI reporting configuration information are different from each other.

Specifically, the CSI reporting configuration information includes at least one of the following:

a reporting periodicity, a time domain offset, a measurement resource, and reporting content.

In some embodiments, the downlink control information includes N pieces of indication information, and the N pieces of indication information are in a one-to-one correspondence with N trigger states in a trigger state list, where one trigger state corresponds to one piece of CSI reporting configuration information.

Optionally, each of the N pieces of indication information includes a reporting content indication field, and the reporting content indication field indicates reporting content of CSI reporting.

Optionally, a trigger state corresponding to each of the N pieces of indication information includes a reporting content indication field, and the reporting content indication field indicates reporting content of CSI reporting.

In some embodiments, the downlink control information includes one piece of indication information. The piece of indication information corresponds to one trigger state set in a trigger state list, and the trigger state set includes N trigger states. One trigger state corresponds to one piece of CSI reporting configuration information.

Optionally, the piece of indication information includes N reporting content indication fields, the N reporting content indication fields are in a one-to-one correspondence with the N pieces of CSI reporting, and the reporting content indication field indicates reporting content of CSI reporting.

Optionally, each of the N trigger states that corresponds to the piece of indication information includes a reporting content indication field, and the reporting content indication field indicates content of the CSI reporting.

Optionally, the piece of indication information includes N time domain offset indication fields, the N time domain offset indication fields are in a one-to-one correspondence with the N pieces of CSI reporting, and the time domain offset indication field indicate a time domain offset for the CSI reporting.

In some embodiments, the communication apparatus 1300 may be configured to implement a function of the terminal device in any one of the foregoing methods. For example, the communication apparatus 1300 may correspond to the terminal device.

The communication apparatus 1300 may be a terminal device, and performs the steps performed by the terminal device in the foregoing method embodiments. The transceiver unit 1310 may be configured to support the communication apparatus 1300 in performing communication, for example, performing a sending and/or receiving action performed by the terminal device in the foregoing method embodiments. The processing unit 1320 may be configured to support the communication apparatus 1300 in performing a processing action in the foregoing method embodiments, for example, performing a processing action performed by the terminal device in the foregoing method embodiments.

Optionally, the communication apparatus may further include the storage unit 1330 (which is not shown in FIG. 13), configured to store program code and data of the communication apparatus.

For details, refer to the following descriptions.

The processing unit 1320 is configured to determine a codebook combination list.

The transceiver unit 1310 is configured to send the codebook combination list to the network device.

The transceiver unit 1310 is further configured to receive codebook configuration information configured by the network device based on the codebook combination list.

Specifically, the codebook combination list includes a first-type codebook, and the first-type codebook is based on an angle-delay reciprocity.

Specifically, the codebook configuration information is used by the apparatus 1300 to feedback channel measurement information.

In some embodiments, the communication apparatus 1300 may be configured to implement a function of the network device in any one of the foregoing methods. For example, the communication apparatus 1300 may correspond to the network device.

The communication apparatus 1300 may be a network device, and performs the steps performed by the network device in the foregoing method embodiments. The transceiver unit 1310 may be configured to support the communication apparatus 1300 in performing communication, for example, performing a sending and/or receiving action performed by the network device in the foregoing method embodiments. The processing unit 1320 may be configured to support the communication apparatus 1300 in performing a processing action in the foregoing method embodiments, for example, performing a processing action performed by the network device in the foregoing method embodiments.

Optionally, the communication apparatus may further include the storage unit 1330 (which is not shown in FIG. 13), configured to store program code and data of the communication apparatus.

For details, refer to the following descriptions.

The transceiver unit 1310 is configured to receive the codebook combination list sent by the terminal device.

The processing unit 1320 is configured to determine the codebook configuration information.

The transceiver unit 1310 is further configured to send the codebook configuration information to the terminal device.

Specifically, the codebook combination list includes the first-type codebook, and the first-type codebook is based on the angle-delay reciprocity.

Specifically, the codebook configuration information is used by the terminal device to feedback the channel measurement information.

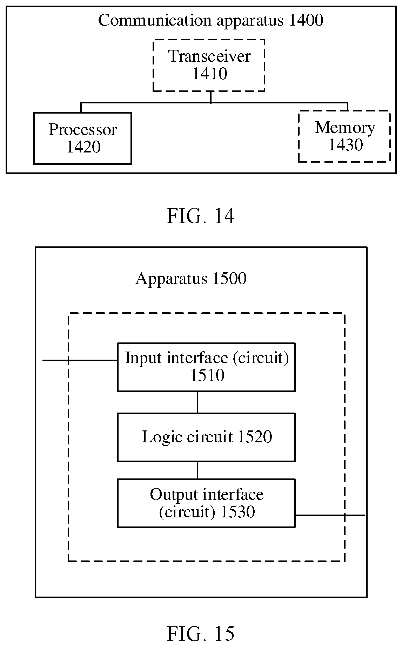

FIG. 14 is an example of an apparatus 1400 of signal transmission according to an embodiment of this application.

As shown in FIG. 14, the apparatus 1400 may include a transceiver 1410, a processor 1420, and a memory 1430. The memory 1430 is configured to store instructions.

The processor 1420 is coupled to the memory 1430, and is configured to execute the instructions stored in the memory, to perform the method provided in the foregoing embodiments of this application.

Specifically, the transceiver 1410 in the apparatus 1400 may correspond to the transceiver unit 1310 in the apparatus 1300, and the processor 1420 in the communication apparatus 1400 may correspond to the processing unit 1320 in the communication apparatus 1300.

It should be understood that the foregoing memory 1430 and the processor 1420 may be integrated into one processing apparatus. The processor 1420 is configured to execute program code stored in the memory 1430 to implement the foregoing functions. During specific implementation, the memory 1430 may be integrated into the processor 1420, or may be independent of the processor 1420.

FIG. 15 is a schematic diagram of still another example of a communication apparatus according to an embodiment of this application. The communication apparatus may be configured to perform the method performed by the foregoing network device or terminal device. As shown in FIG. 15, the communication apparatus includes:

at least one input interface (Input(s)) 1510, a logic circuit 1520, and at least one output interface (Output(s)) 1530. Optionally, the logic circuit may be a chip or another integrated circuit that can implement the method in this application.

The input interface 1510 is configured to input or receive data; the output interface 1530 is configured to output or send data; and the logic circuit 1520 is configured to perform the foregoing possible methods shown in FIG. 2 to FIG. 11.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners.

For example, the described apparatus embodiment is merely an example. For example, division into the units is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for triggering channel state information CSI reporting, comprising:

   receiving, by a terminal device, downlink control information sent by a network device, wherein the downlink control information is for triggering N pieces of CSI reporting, the N pieces of CSI reporting are in a one-to-one correspondence with N pieces of CSI reporting configuration information indicated by the downlink control information, the N pieces of CSI reporting configuration information are different from each other, and N is a positive integer greater than 1; and

performing, by the terminal device, the N pieces of CSI reporting based on the N pieces of CSI reporting configuration information.

2. The method according to claim 1, wherein the CSI reporting configuration information comprises at least one of the following:
a reporting periodicity, a time domain offset, a measurement resource, and reporting content.

3. The method according to claim 1 or 2, wherein the downlink control information comprises N pieces of indication information, and the N pieces of indication information are in a one-to-one correspondence with N trigger states in a trigger state list, wherein one trigger state corresponds to one piece of CSI reporting configuration information.

4. The method according to claim 1 or 2, wherein the downlink control information comprises one piece of indication information, the piece of indication information corresponds to one trigger state set in a trigger state list, and the trigger state set comprises N trigger states, wherein one trigger state corresponds to one piece of CSI reporting configuration information.

5. The method according to claim 3, wherein each of the N pieces of indication information or each of the N trigger states comprises a reporting content indication field, and the reporting content indication field indicates reporting content of CSI reporting.

6. The method according to claim 4, wherein the piece of indication information comprises N reporting content indication fields, the N reporting content indication fields are in a one-to-one correspondence with the N pieces of CSI reporting, and the reporting content indication field indicates reporting content of CSI reporting; or
each of the N trigger states comprises a reporting content indication field, and the reporting content indication field indicates reporting content of CSI reporting.

7. The method according to claim 4, wherein the piece of indication information comprises N time domain offset indication fields, the N time domain offset indication fields are in a one-to-one correspondence with the N pieces of CSI reporting, and the time domain offset indication field indicates a time domain offset of CSI reporting.

8. A method for configuring a capability of a terminal device, comprising:

sending, by the terminal device, a codebook combination list to a network device, wherein the codebook combination list comprises a first-type codebook, and the first-type codebook is based on an angle-delay reciprocity; and

receiving, by the terminal device, codebook configuration information configured by the network device based on the codebook combination list, wherein the codebook configuration information is used by the terminal device to feedback channel measurement information.

9. A method for triggering channel state information CSI reporting, comprising:

sending, by a network device, downlink control information to a terminal device, wherein the downlink control information is for triggering N pieces of CSI reporting, the N pieces of CSI reporting are in a one-to-one correspondence with N pieces of CSI reporting configuration information indicated by the downlink control information, the N pieces of CSI reporting configuration information are different from each other, and N is a positive integer greater than 1; and

receiving, by the network device, the N pieces of CSI reporting performed by the terminal device based on the N pieces of CSI reporting configuration information.

10. The method according to claim 9, wherein CSI reporting configuration information comprises at least one of the following:
a reporting periodicity, a time domain offset, a measurement resource, and reporting content.

11. The method according to claim 9 or 10, wherein the downlink control information comprises N pieces of indication information, and the N pieces of indication information are in a one-to-one correspondence with N trigger states in a trigger state list, wherein one trigger state corresponds to one piece of CSI reporting configuration information.

12. The method according to claim 9 or 10, wherein the downlink control information comprises one piece of indication information, the piece of indication information corresponds to one trigger state set in a trigger state list, and the trigger state set comprises N trigger states, wherein one trigger state corresponds to one piece of CSI reporting configuration information.

13. The method according to claim 11, wherein each of the N pieces of indication information or each of the N trigger states comprises a reporting content indication field, and the reporting content indication field indicates reporting content of CSI reporting.

14. The method according to claim 12, wherein the piece of indication information comprises N reporting content indication fields, the N reporting content indication fields are in a one-to-one correspondence with the N pieces of CSI reporting, and the reporting content indication field indicates reporting content of CSI reporting; or
each of the N trigger states comprises a reporting content indication field, and the reporting content indication field indicates reporting content of CSI reporting.

15. The method according to claim 12, wherein the piece of indication information comprises N time domain offset indication fields, the N time domain offset indication fields are in a one-to-one correspondence with the N pieces of CSI reporting, and the time domain offset indication field indicates a time domain offset of CSI reporting.

16. A method for configuring a capability of a terminal device, comprising:

receiving, by a network device, a codebook combination list sent by the terminal device, wherein the codebook combination list comprises a first-type codebook, and the first-type codebook is based on an angle-delay reciprocity; and
sending, by the network device, codebook configuration information to the terminal device, wherein the codebook configuration information is configured by the network device based on the codebook combination list, and the codebook configuration information is used by the terminal device to feedback channel measurement information.

17. An apparatus for triggering channel state information CSI reporting, comprising:

a transceiver unit, configured to receive downlink control information sent by a network device, wherein the downlink control information is for triggering N pieces of CSI reporting, the N pieces of CSI reporting are in a one-to-one correspondence with N pieces of CSI reporting configuration information indicated by the downlink control information, the N pieces of CSI reporting configuration information are different from each other, and N is a positive integer greater than 1; and
a processing unit, configured to determine the N pieces of CSI reporting configuration information, wherein the transceiver unit is further configured to perform the N pieces of CSI reporting based on the N pieces of CSI reporting configuration information.

18. The apparatus according to claim 17, wherein the CSI reporting configuration information comprises at least one of the following:
a reporting periodicity, a time domain offset, a measurement resource, and reporting content.

19. The apparatus according to claim 17 or 18, wherein the downlink control information comprises N pieces of indication information, and the N pieces of indication information are in a one-to-one correspondence with N trigger states in a trigger state list, wherein one trigger state corresponds to one piece of CSI reporting configuration information.

20. The apparatus according to claim 17 or 18, wherein the downlink control information comprises one piece of indication information, the piece of indication information corresponds to one trigger state set in a trigger state list, and the trigger state set comprises N trigger states, wherein one trigger state corresponds to one piece of CSI reporting configuration information.

21. The apparatus according to claim 19, wherein each of the N pieces of indication information or each of the N trigger states comprises a reporting content indication field, and the reporting content indication field indicates reporting content of CSI reporting.

22. The apparatus according to claim 20, wherein the piece of indication information comprises N reporting content indication fields, the N reporting content indication fields are in a one-to-one correspondence with the N pieces of CSI reporting, and the reporting content indication field indicates reporting content of CSI reporting; or
each of the N trigger states comprises a reporting content indication field, and the reporting content indication field indicates reporting content of CSI reporting.

23. The apparatus according to claim 20, wherein the piece of indication information comprises N time domain offset indication fields, the N time domain offset indication fields are in a one-to-one correspondence with the N pieces of CSI reporting, and the time domain offset indication field indicates a time domain offset of CSI reporting.

24. An apparatus for configuring a capability of a terminal device, comprising:

   a processing unit, configured to determine a codebook combination list; and
   a transceiver unit, configured to send the codebook combination list to a network device, wherein the codebook combination list comprises a first-type codebook, and the first-type codebook is based on an angle-delay reciprocity, wherein
   the transceiver unit is further configured to receive codebook configuration information configured by the network device based on the codebook combination list, and the codebook configuration information is used by the apparatus to feedback channel measurement information.

25. An apparatus for triggering channel state information CSI reporting, comprising:

   a processing unit, configured to determine downlink control information; and
   a transceiver unit, configured to send the downlink control information to a network device, wherein the downlink control information is for triggering N pieces of CSI reporting, the N pieces of CSI reporting are in a one-to-one correspondence with N pieces of CSI reporting configuration information indicated by the downlink control information, the N pieces of CSI reporting configuration information are different from each other, and N is a positive integer greater than 1, wherein
   the transceiver unit is further configured to receive the N pieces of CSI reporting performed by the terminal device based on the N pieces of CSI reporting configuration information.

26. The apparatus according to claim 25, wherein the CSI reporting configuration information comprises at least one of the following:
   a reporting periodicity, a time domain offset, a measurement resource, and reporting content.

27. The apparatus according to claim 25 or 26, wherein the downlink control information comprises N pieces of indication information, and the N pieces of indication information are in a one-to-one correspondence with N trigger states in a trigger state list, wherein one trigger state corresponds to one piece of CSI reporting configuration information.

28. The apparatus according to claim 25 or 26, wherein the downlink control information comprises one piece of indication information, the piece of indication information corresponds to one trigger state set in a trigger state list, and the trigger state set comprises N trigger states, wherein one trigger state corresponds to one piece of CSI reporting configuration information.

29. The apparatus according to claim 27, wherein each of the N pieces of indication information or each of the N trigger states comprises a reporting content indication field, and the reporting content indication field indicates reporting content of CSI reporting.

30. The apparatus according to claim 28, wherein the piece of indication information comprises N reporting content indication fields, the N reporting content indication fields are in a one-to-one correspondence with the N pieces of CSI reporting, and the reporting content indication field indicates reporting content of CSI reporting; or
each of the N trigger states comprises a reporting content indication field, and the reporting content indication field indicates reporting content of CSI reporting.

31. The apparatus according to claim 28, wherein the piece of indication information comprises N time domain offset indication fields, the N time domain offset indication fields are in a one-to-one correspondence with the N pieces of CSI reporting, and the time domain offset indication field indicates a time domain offset of CSI reporting.

32. An apparatus for configuring a capability of a terminal device, comprising:

a transceiver unit, configured to receive a codebook combination list sent by the terminal device, wherein the codebook combination list comprises a first-type codebook, and the first-type codebook is based on an angle-delay reciprocity; and
a processing unit, configured to determine codebook configuration information, wherein the codebook configuration information is configured by the apparatus based on the codebook combination list, and the codebook configuration information is used by the terminal device to feedback channel measurement information, wherein the transceiver unit is further configured to send the codebook configuration information to the terminal device.

33. A communication apparatus, comprising at least one processor, wherein the processor is coupled to a memory;

the memory is configured to store program instructions and data; and
the processor is configured to execute the instructions in the memory, to implement the method according to any one of claims 1 to 7 or claims 9 to 15.

34. A communication apparatus, comprising at least one processor, wherein the processor is coupled to a memory;

the memory is configured to store program instructions and data; and
the processor is configured to execute the instructions in the memory to implement the method according to claim 8 or claim 16.

35. A communication apparatus, comprising a logic circuit and an input/output interface, wherein

the input/output interface is configured to input or output data or information; and
the logic circuit is configured to perform, based on the data or information, the method according to any one of claims 1 to 7 or claims 9 to 15.

36. A communication apparatus, comprising a logic circuit and an input/output interface, wherein

the input/output interface is configured to input or output data or information; and
the logic circuit is configured to perform, based on the data or information, the method according to claim 8 or claim 16.

37. A computer program product comprising instructions, wherein when the computer program product runs on a computer, the method according to any one of claims 1 to 7 is performed, or the method according to any one of claims 9 to 15 is performed.

38. A computer program product comprising instructions, wherein when the computer program product runs on a computer, the method according to claim 8 or claim 16 is performed.

39. A computer-readable storage medium, wherein the computer-readable medium stores computer instructions, and when the computer instructions run on a computer, the computer is enabled to perform the method according to any one of claims 1 to 16.

FIG. 1

FIG. 2

Network device

CSI-RS CSI-RS CSI-RS CSI-RS

| RRC | MAC-CE | DCI | | | | | DCI | MAC-CE |
|---|---|---|---|---|---|---|---|---|
| 1. CSI-RS/CSI configuration | 2. Activate CSI-RS delivery | 3. Activate CSI reporting | 4. CSI reporting | CSI reporting | CSI reporting | | 5. Deactivate the CSI reporting | 6. Deactivate the CSI-RS delivery |

Terminal
device

FIG. 3

EP 4 340 505 A1

FIG. 4

FIG. 5

CSI resource configuration identifier (CSI-ResourceconfigId)

CSI-RS resource configuration list (CSI-RS-ResourceSetList)

CSI-RS resource configuration X (CSI-RS-ResourceSetX)

Other configuration

Resource configuration (resourceSet)

CSI report configuration (CSI-ReportConfig)

CSI report configuration identifier (CSI-ReportConfigId)

Resource for channel measurement (resourceForChannelMeasuerment)

Report time domain offset list (reportSlotOffsetList)

Other configuration

Aperiodic report trigger state list (aperiodicTriggerStateList)

Aperiodic report trigger state X (aperiodicTriggerStateX)

X: CSI report configuration identifier (CSI-ReportConfigId)

Resource configuration (resourceSet)

Other configuration

Other configuration

Codepoint (Codepoint)

Codepoint (Codepoint)

Downlink control information (DCI format 0_1)

CSI request 2 (CSI-Request2)

Time domain resource assignment (Time domain resource assignment2)

Other configuration

Method 600

```
┌─────────────────────┐         ┌─────────────────────┐
│   Network device    │         │   Terminal device   │
└─────────────────────┘         └─────────────────────┘
```

S610: The network device sends
downlink control information to the
terminal device, where the downlink
control information is for triggering
N pieces of channel state information
CSI reporting

S620: The terminal device performs
the N pieces of CSI reporting based
on configuration information of the N
pieces of CSI reporting

FIG. 6

Network
device

CSI-RS          CSI-RS    CSI-RS    CSI-RS

| RRC | MAC-CE | DCI | | | | | | DCI | MAC-CE |

1. CSI-RS/CSI configuration

2. Activate CSI-RS delivery

3. Activate CSI reporting

4. Long-term CSI reporting

5. Short-term CSI reporting

Short-term CSI reporting

Long-term CSI reporting

6. Deactivate the CSI reporting

7. Deactivate the CSI-RS delivery

Terminal
device

Long-term reporting periodicity

Short-term reporting periodicity

FIG. 7

EP 4 340 505 A1

FIG. 8

FIG. 9A

CONT. FROM FIG. 9A

CSI resource configuration identifier (CSI-Resourceconfigid)

CSI-RS resource configuration list (CSI-RS-ResourceSetList)

CSI-RS resource configuration X (CSI-RS-ResourceSetX)

Other configuration

Resource configuration (resourceSet)

CSI report configuration (short-term) (CSI-ReportConfig)

CSI report configuration identifier (CSI-ReportConfigId)

Resource for channel measurement (resourceForChannel Measuement)

Report time domain offset list (reportSlotOffsetList)

Other configuration

Aperiodic report trigger state list (aperiodicTrigger StateList)

Aperiodic report trigger state X (aperiodicTrigger StateX)

X: CSI report configuration identifier (CSI-ReportConfigId)

Resource configuration (resourceSet)

Other configuration

Other configuration

Codepoint (Codepoint)

Codepoint (Codepoint)

CONT. FROM FIG. 9A

CSI request 2 (CSI-Request2)

Time domain resource assignment (Time domain resource assignment2)

Reporting content indication

Other configuration

FIG. 9B

FIG. 10

FIG. 11

Method 1200

```
┌─────────────────┐                    ┌─────────────────┐
│                 │                    │                 │
│ Network device  │                    │ Terminal device │
│                 │                    │                 │
└────────┬────────┘                    └────────┬────────┘
         │  S1210: The terminal device sends a  │
         │◄─────codebook combination list to the┤
         │            network device            │
         │                                      │
         │     S1220: The network device sends  │
         ├───codebook configuration information to─►
         │          the terminal device         │
         │                                      │
         │   S1230: The terminal device feeds back
         │    channel state information to the  │
         │◄─network device based on the codebook┤
         │       configuration information      │
         │                                      │
```

FIG. 12

```
┌───────────────────────────────────────────────┐
│             Communication                      │
│            apparatus 1300                      │
│                                                │
│   ┌────────────────┐       ┌────────────────┐  │
│   │ Transceiver unit│       │ Processing unit│  │
│   │      1310       ├───────┤      1320      │  │
│   └────────────────┘       └────────────────┘  │
│                                                │
└───────────────────────────────────────────────┘
```

FIG. 13

Communication apparatus 1400

Transceiver 1410

Processor 1420

Memory 1430

FIG. 14

Apparatus 1500

Input interface (circuit) 1510

Logic circuit 1520

Output interface (circuit) 1530

FIG. 15

## INTERNATIONAL SEARCH REPORT

| International application No. |
| --- |
| **PCT/CN2022/125362** |

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNKI, CNPAT, WPI, EPODOC, 3GPP: 下行控制信息, 测量, 上报, 报告, 信道状态信息, 配置, 触发, 码本, 支持, 能力, 互易, 角度, 时延, 延时, DCI, measure+, report, CSI, configurat+, trigger, codebook, support, capability, reciproc+, delay, angle

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021209206 A1 (TELEFONAKTIEBOLAGET LM ERICSSON (PUBL)) 21 October 2021 (2021-10-21) description, page 4, line 20-page 5, line 18, page 13, line 15-page 17, line 20, page 22, line 22-page 24, line 10 | 1-7, 9-15, 17-23, 25-31, 33, 35, 37, 39 |
| X | US 2021176001 A1 (LENOVO BEIJING LTD.) 10 June 2021 (2021-06-10) description, paragraphs 0049-0085 | 1-7, 9-15, 17-23, 25-31, 33, 35, 37, 39 |
| X | CN 111418175 A (TELEFONAKTIEBOLAGET LM ERICSSON (PUBL)) 14 July 2020 (2020-07-14) description, paragraphs 0069-0127 | 1-7, 9-15, 17-23, 25-31, 33, 35, 37, 39 |
| X | CN 111247829 A (MEDIATEK INC.) 05 June 2020 (2020-06-05) description, paragraphs 0054-0076 | 1-7, 9-15, 17-23, 25-31, 33, 35, 37, 39 |
| X | CN 111769857 A (HUAWEI TECHNOLOGIES CO., LTD.) 13 October 2020 (2020-10-13) description, paragraphs 0158-0161 and 0191-0324 | 1-7, 9-15, 17-23, 25-31, 33, 35, 37, 39 |
| X | NOKIA, et al. "Impact of beam management on RAN2" *3GPP TSG-RAN WG2 #100 R2-1713414*, 01 December 2017 (2017-12-01), section 2 | 1-7, 9-15, 17-23, 25-31, 33, 35, 37, 39 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 December 2022** | **15 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/125362**

**C.    DOCUMENTS CONSIDERED TO BE RELEVANT**

| Category* | Citation of document, with indication, where appropriate, of the relevant passages | Relevant to claim No. |
|---|---|---|
| A | HUAWEI, et al. "Discussion on CSI Enhancements for Rel-17" *3GPP TSG RAN WG1 Meeting #106bis-e R1- 2108762,* 19 October 2021 (2021-10-19), entire document | 1-39 |

Form PCT/ISA/210 (second sheet) (January 2015)

**INTERNATIONAL SEARCH REPORT**
Information on patent family members

International application No.

**PCT/CN2022/125362**

| Patent document cited in search report | | | Publication date (day/month/year) | Patent family member(s) | | | Publication date (day/month/year) |
|---|---|---|---|---|---|---|---|
| WO | 2021209206 | A1 | 21 October 2021 | CN | 115428354 | A | 02 December 2022 |
| US | 2021176001 | A1 | 10 June 2021 | WO | 2019213943 | A1 | 14 November 2019 |
| | | | | EP | 3791496 | A1 | 17 March 2021 |
| | | | | CN | 112088506 | A | 15 December 2020 |
| CN | 111418175 | A | 14 July 2020 | US | 2020295903 | A1 | 17 September 2020 |
| | | | | JP | 2020536427 | A | 10 December 2020 |
| | | | | EP | 3692669 | A1 | 12 August 2020 |
| | | | | WO | 2019069234 | A1 | 11 April 2019 |
| CN | 111247829 | A | 05 June 2020 | TW | 202101930 | A | 01 January 2021 |
| | | | | WO | 2019242737 | A1 | 26 December 2019 |
| | | | | US | 2019393979 | A1 | 26 December 2019 |
| | | | | EP | 3808123 | A1 | 21 April 2021 |
| CN | 111769857 | A | 13 October 2020 | WO | 2020200059 | A1 | 08 October 2020 |
| | | | | KR | 20210142724 | A | 25 November 2021 |
| | | | | EP | 3937391 | A1 | 12 January 2022 |
| | | | | US | 2022022193 | A1 | 20 January 2022 |
| | | | | JP | 2022528402 | W | 10 June 2022 |
| | | | | CN | 114928386 | A | 19 August 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111414184